(19) Europäisches Patentamt
European Patent Office
Office européen des brevets

(11) EP 4 551 372 B1

(12) **EUROPEAN PATENT SPECIFICATION**

(45) Date of publication and mention of the grant of the patent:
**17.06.2026 Bulletin 2026/25**

(21) Application number: **23739268.3**

(22) Date of filing: **07.07.2023**

(51) International Patent Classification (IPC):
***B27N 3/00*** (2006.01) ***B27N 3/02*** (2006.01)
***C08G 12/46*** (2006.01) ***C08G 69/10*** (2006.01)
***C08L 77/04*** (2006.01) ***C08L 97/02*** (2006.01)
***C09J 177/04*** (2006.01)

(52) Cooperative Patent Classification (CPC):
(C-Sets available)
**C08G 69/10; B27N 3/002; B27N 3/007; B27N 3/02; B27N 3/04; C08G 12/46; C08L 97/02; C09J 177/04**
(Cont.)

(86) International application number:
**PCT/EP2023/068885**

(87) International publication number:
**WO 2024/008938 (11.01.2024 Gazette 2024/02)**

(54) **COMPOSITIONS FOR FIBREBOARDS WITH ENHANCED PROPERTIES UPON FAST-CURING AT LOW TEMPERATURE**

KOMPOSITIONEN, DIE FÜR OBJEKTE MIT ERWEITERTEN EIGENSCHAFTEN GEEIGNET SIND

COMPOSITIONS ADAPTÉES AUX OBJETS AUX PROPRIÉTÉS AMÉLIORÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.07.2022 EP 22183771**

(43) Date of publication of application:
**14.05.2025 Bulletin 2025/20**

(73) Proprietor: **Covestro (Netherlands) B.V.**
**6167 RD Geleen (NL)**

(72) Inventors:
- **VELDHUIS, Teunis Frederikus Johannes**
**8131 DK WIJHE (NL)**
- **DAVIES, Philip John**
**3514 HM UTRECHT (NL)**
- **KONING, Cornelis Eme**
**8043 KB ZWOLLE (NL)**

(74) Representative: **Levpat**
**c/o Covestro AG**
**Gebäude K12**
**51365 Leverkusen (DE)**

(56) References cited:
**WO-A1-2022/136612 US-A1- 2012 202 041**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 177/04, C08L 97/02**

## Description

### FIELD OF THE INVENTION

The invention lies in the field of compositions comprising vegetable fibers, a hyperbranched polylysine and a component having groups of the following formulae

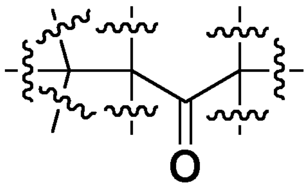 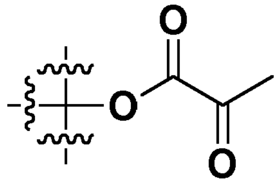

which compositions are particularly suitable for the preparation of objects such as engineered wood e.g. fibreboards.

### BACKGROUND

In the context of this invention but also in the literature, polylysine refers to several types of lysine homopolymers which may differ from each other in terms of stereochemistry and link position. Lysine (in either of its two enantiomeric forms, namely D- and L-lysine; 'L' and 'D' refer to the chirality at lysine's central carbon atom) which is the precursor amino acid, contains two amino groups; one at the $\alpha$-carbon and one at the $\varepsilon$-carbon. Either of these two amino groups can be the location of polymerization, resulting in $\alpha$-polylysine or $\varepsilon$-polylysine.

Fibers (or fibres; the terms are used interchangeably in the context of this invention) constitute a class of materials that are continuous filaments or are in discrete elongated pieces, similar to lengths of thread. Human uses for fibers are diverse. They can be spun into filaments, string or rope, used as a reinforcing agent in composites into sheets to make products such as paper or felt. Fibers are often used in the manufacture of other materials. Fibers may be recycled. In the context of this invention the term 'fiber' includes also recycled fibers.

On the basis of their origin, fibers are divided into two main categories namely natural and synthetic fibers. Synthetic fibers are also known as man-made or artificial or manufactured fibers.

Natural fibers are further divided into: i) mineral fibers (e.g. asbestos, wollastonite, attapulgite, halloysite), ii) animal fibers (e.g. silk, wool, sinew, cashmere, mohair, angora, animal hair), and iii) vegetable fibers are based on arrangements of cellulose (known also as 'natural cellulose fibers'), or arrangements of cellulose with lignin (known also as 'natural lignocellulosic fibers'), and are derived from sources of natural cellulose or natural cellulose with lignin, such as from plants which are living organisms of the kind exemplified by trees, bamboos, shrubs, herbs, grasses, ferns, and mosses, absorbing water and inorganic substances through its roots, and synthesizing nutrients in its leaves by photosynthesis using the green pigment chlorophyll. Examples of vegetable fibers include but are not limited to wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf (hibiscus cannabinus) fibers, straw fibers, grass fibers, leaf fibers, and mixtures thereof.

Synthetic (also known as man-made or artificial or manufactured fibers) can be further divided into: i) cellulose fibers regenerated from natural resources, known also as cellulose-regenerated fibers (e.g. rayon, modal, Lyocell, cellulose acetate, cellulose triacetate), ii) inorganic fibers and iii) polymer fibers.

Cellulose fibers are a subset of fibers. Cellulose fibers are fibers of cellulose from any source, either natural or manufactured (the latter is also known as synthetic cellulose fibers). Therefore, cellulose fibers can be natural (e.g. cellulose fibers from sources of natural cellulose such as from trees (including bamboos), seaweed, or synthetic (e.g. cellulose fibers regenerated from natural cellulose such as rayon, modal, Lyocell, cellulose acetate, cellulose triacetate). The synthetic cellulose fibers are also known in the art as man-made cellulose fibers or as regenerated cellulose fibers or as manufactured cellulose fibers or as artificial cellulose fibers.

In the context of this invention the terms "synthetic cellulose fibers", "man-made cellulose fibers" or "manufactured cellulose fibers" or "artificial cellulose fibers" or "regenerated cellulose fibers" are used interchangeably and these terms are used to distinguish the synthetic cellulose fibers from the natural cellulose fibers and the natural lignocellulosic fibers, the latter two being vegetable fibers.

One of the most important type of fibers are wood (including recycled wood) fibers. There are two main types of wood: a) softwoods and b) hardwoods. Softwoods come from cone bearing trees. Exemplary softwoods include but are not limited to pine, redwood, and fir. Softwoods can be used for furniture and doors but are mostly used in construction for roof trusses and stud partitions. Hardwoods come from leaved trees. These trees may have flowers and may produce seeds such as nuts and fruit. Exemplary hardwoods include but are not limited to oak, beech and mahogany. Hardwoods are

denser than softwoods and are stronger and more durable as well. They are used for furniture and are typically more expensive than softwoods. Wood may be recycled. In the context of this invention the term 'wood' includes also recycled wood.

During the wood production, wood (softwoods, hardwoods) is used to manufacture timber (also known as lumber); timber is effectively wood manufactured into beams and planks. In the context of this invention the term 'solid wood' is used to distinguish between timber and engineered wood.

Engineered wood (also known as mass timber, composite wood, man-made wood, or manufactured board) includes a range of derivative wood products which are manufactured by binding or fixing together the various wood elements (e.g. fibers, filaments, yarns, strips, strands, threads, staple fiber yarns, particles, chips (e.g. wood chips, sawdust), shavings (e.g. sawmill shavings), flakes, lamellae, pulp (e.g. wood pulp), and mixtures thereof), via various methods of fixation to form effectively a composite material. Exemplary types of engineered wood include but are not limited to plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites. Engineered wood products are engineered to precise design specifications, which are tested to meet national or international standards and provide uniformity and predictability in their structural performance. Engineered wood products are used in a variety of applications, from home construction to commercial buildings to industrial products.

Fibreboards constitute a subset of engineered wood. Types of fibreboards (in order of increasing density) include low-density fibreboards (LDF; known also as particle boards or chip boards), medium-density fibreboards (MDF), high-density fibreboards (HDF; known also as waferboards, flakeboards). In the context of this invention fibreboards with density of at most 500 kg/m$^3$ (preferably of at least 100 and at most 500 kg/m$^3$) are viewed as LDF. In the context of this invention fibreboards with density higher than 500 and at most 1000 kg/m$^3$ (preferably of at least 550 and at most 800 kg/m$^3$) are viewed as MDF. In the context of this invention fibreboards with density higher than 1000 kg/m$^3$ (preferably higher than 1000 and at most 1500, more preferably higher than 1000 and at most 1100 kg/m$^3$) are viewed as HDF. In principle, fibreboards can be formed using either a wet-forming or a dry-forming process. In a wet-forming process, water is used to distribute the fibers into a mat and then pressed into a board. In the dry process, fibers from the refiner go through a dryer and blow line where an adhesive is applied and then formed into a web which is pressed into a board. A typical fibreboard manufacture -at an industrial scale- begins with wood chipping: fresh or recycled wood material is cut and sorted to small pieces of similar size. Chips are washed to remove things such as dirt and sand. Metal scraps such as nails can be removed with a magnet placed over a conveyor belt on which the chips move forward. In the case of, for example MDF, chips are then steamed to soften them for defibration. Small amount of paraffin wax is added to the steamed chips and they are transformed into fluffy fibers in a defibrator and soon afterwards sprayed with urea-formaldehyde resins (UF) or phenol-formaldehyde resins (PF). Wax prevents fibers from clumping together during storage. Chips in the case of particle boards may also be sprayed with an additional resin before the next steps. Fibers or chips are arranged into a uniform 'mat' on a conveyor belt. This mat is pre-compressed and then hot-pressed (simultaneous application of heat and pressure). Hot-pressing binds the fibers or chips together. The board is then cooled, trimmed, sanded and maybe veneered or laminated. UF resins are dominantly used in the MDF industry.

In recent years, there is an increasing demand for compositions that are able to fast-cure (that is a press time factor equal to 9 sec/mm) at low temperature (that is 160 °C) to prepare fibreboards [the term includes low-density fibreboard (LDF; known also as particle board or chip board), medium-density fibreboard (MDF), and high-density fibreboard (HDF; known also as waferboard, flakeboard)], that have:

- internal bond strength of at least 0.4 MPa,
- modulus of rupture ($R_b$) of at least 10 MPa, and
- apparent modulus of elasticity (E) of at least 1700 MPa.

Both the modulus of rupture ($R_b$) and the apparent modulus of elasticity (E) constitute the flexural properties of an object e.g. a fibreboard. The internal bond strength and the flexural properties of fibreboards are critical for their consumer acceptance as well as their commercial success. Fibreboards that do not meet at least one of the above thresholds for each one of internal bond strength, $R_b$ and E do not perform at a level acceptable by the end consumer. Fibreboards with enhanced internal bond strength and flexural properties are thus desirable. Enhanced flexural properties allow for more tolerance in mechanical and/or physical stresses that fibreboards are subject to during their lifetime of use including -but not limited to- their preparation, packaging, unpackaging, transport, storage and use. Fibreboards that suffer from poor flexural properties are usually fragile with little or no tolerance at all for mechanical and/or physical stresses. As a consequence the poor flexural properties severely limits their application and uses -if any-, and/or their lifetime -once in

use- and consequently are typically rejected by the consumers. In addition, enhanced internal bond strength is also desirable since it ensures acceptable physical integrity and allow for more tolerance in mechanical and/or physical stresses that fibreboards are subject to during their lifetime of use. Fast-curing at low temperature of compositions suitable for preparing fibreboards is also very desirable since it enhances production efficiencies, increases throughput and lowers the amount of energy required to cure said compositions.

The WO 2022/136612 A1 provided for a binder composition comprising component A comprising polymer(s) A1 and optionally component B comprising component B1 which is selected from the group consisting of monosaccharides, disaccharides, hydroxyacetone, glycolaldehyde and mixtures thereof, wherein polymer(s) A1 comprises at least 70 wt% poly(amino acid)s based on the total weight of the polymer(s) A1 and has(have) a total weight average molecular weight Mw, total of 800 g/mol to 10000 g/mol, wherein the binder composition comprises 60 to 100 wt% polymer(s) A1, and 0 to 40 wt% component B1, based on the total weight of the sum of polymer(s) A1 and component B1, wherein the weight amounts of the polymer(s) A1 and component B1 are selected such that the total weight of the sum of polymer(s) A1 and component B1 is 100 wt%. The WO 2022/136612 A1 did not -at least- disclose a composition comprising a polylysine component and a XL-component as each one of them is specified in the specification.

The US 2012/202041 A1 related to A multilayer lignocellulose-containing molding comprising

A) a middle layer or a plurality of middle layers comprising lignocellulose-containing particles which is/are obtainable by using a binder (a) and
B) a covering layer or a plurality of covering layers comprising lignocellulose-containing particles which is/are obtainable by using a binder (b),

the binder (a) being selected from the group consisting of (al) formaldehyde resins and (a2) an organic iso-cyanate having at least two isocyanate groups;
the binder (b) comprising the following components: an aqueous component (I) comprising

(i) a polymer A which is composed of the following monomers:

a) from 70 to 100% by weight of at least one ethylenically unsaturated mono- and/or dicarboxylic acid (monomer(s) A1) and
b) from 0 to 30% by weight of at least one further ethylenically unsaturated monomer which differs from the monomers A1 (monomer(s) A2)

optionally
(ii) a low molecular weight crosslinking agent having at least two functional groups which are hydroxyl, carboxyl, derivatives thereof, primary amine, secondary amine, tertiary amine, epoxy, aldehyde, or
an organic isocyanate having at least two isocyanate groups as component (II) and, optionally, a component (III), as an aqueous dispersion, comprising one or more polymer(s) M which is/are composed of the following monomers:

a) from 0 to 50% by weight of at least one ethylenically unsaturated monomer which comprises at least one epoxide and/or at least one hydroxyalkyl group (monomer(s) M1) and
b) from 50 to 100% by weight of at least one further ethylenically unsaturated monomer which differs from the monomers M1 (monomer(s) M2)

and, optionally, additives as component (IV),
and at least one middle layer A) comprising expanded plastic particles and, optionally, at least one covering layer B) comprising expanded plastic particles,
and the binder (b) optionally comprises a formaldehyde scavenger.

The US 2012/202041 A1 did not -at least- disclose a composition comprising a polylysine component and a XL-component as each one of them are specified in the specification.

The WO 2022/096518 A1 disclosed a composition comprising a polylysine component and a fibrous component. WO 2022/096518 A1 aimed to provide for objects such as fibreboards which have enhanced flexural properties; the fibreboards of WO 2022/096518 A1 were prepared upon curing of its compositions at high temperature which was 210 °C and with a press time factor of 30 sec/mm. The WO 2022/096518 A1 did not -at least- disclose a composition comprising a XL-component as the latter is specified in the specification.

None of WO 2022/136612 A1, US 2012/202041 A1, WO 2022/096518 A1, WO 2020/230034 A1, WO 2008/057390 A2, WO 2008/068180 A1, WO 2016/009054 A1, WO 2016/009062 A1, WO 2022/096518, KR

102187998 B1, CN 110903786 A, WO 2010/031718 A1, WO 2008/046892 A2, WO 2009/037240 A1, US 8846842 B2, US 2007277928 A1, US 8790632 B2, WO 2022136611 A1, WO 2022136613 A1, WO 2022136614 A1, disclosed a composition as disclosed in the specification and none of them dealt with the provision of compositions that are able to fast-cure (that is a press time factor equal to 9 sec/mm) at low temperature (that is 160 °C) to prepare fibreboards [the term includes low-density fibreboard (LDF; known also as particle board or chip board), medium-density fibreboard (MDF), and high-density fibreboard (HDF; known also as waferboard, flakeboard)], that have:

- internal bond strength of at least 0.4 MPa,
- modulus of rupture ($R_b$) of at least 10 MPa, and
- apparent modulus of elasticity (E) of at least 1700 MPa.

let alone provide a solution to this problem.

Therefore, unless a technical solution that would enable the fast preparation of fibreboards at low temperature and at the same time ensure enhanced internal bond strength, a $R_b$ and an E, fibreboards restrict their use in a variety of - otherwise potential- industrial uses for them.

Such a desired technical solution still represents an unmet need since the solution to such a problem, is particularly challenging and complex.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed before the priority date of each claim of this application.

## SUMMARY OF THE INVENTION

The invention relates to compositions comprising a constituent-A, which constituent-A consists of a polylysine component, a XL-component, and a fibrous component which fibrous component consists of at least one fibrous element which fibrous element comprises vegetable fibers, and wherein the fibrous element is free of any fibers other than the vegetable fibers, and wherein the composition is free of any fibers other than the vegetable fibers of the fibrous component (compositions of the invention). The invention further relates to processes for obtaining an object from the compositions of the invention. The invention further relates to objects such as sheets, tapes, sticks, strips, films, cloths, containers, boards, panels, beams, frames, planks, engineered wood e.g. fibreboards obtained by said processes (objects of the invention). The invention further relates to articles comprising a) a part which is solid at 23 °C and 1 atm; and one or both of b) and c), wherein b) is a composition of the invention, and c) is an object of the invention (articles of the invention). The invention further relates to various uses of any one or any combination of the compositions of the invention, the objects of the invention and the articles of the invention.

The goal of the invention is to provide for compositions that are able to fast-cure (that is a press time factor equal to 9 sec/mm) at low temperature (that is 160 °C) to prepare fibreboards [the term includes low-density fibreboard (LDF; known also as particle board or chip board), medium-density fibreboard (MDF), and high-density fibreboard (HDF; known also as waferboard, flakeboard)], that have:

- internal bond strength of at least 0.4 MPa,
- modulus of rupture ($R_b$) of at least 10 MPa, and
- apparent modulus of elasticity (E) of at least 1700 MPa.

This goal was surprisingly achieved by the compositions as described in the claims and disclosed in the specification.

More particularly, it has surprisingly been found that when the compositions of the invention were fast-cured at 160 °C to prepare fibreboards, the resulted fibreboards had:

- internal bond strength of at least 0.4 MPa,
- modulus of rupture ($R_b$) of at least 10 MPa, and
- apparent modulus of elasticity (E) of at least 1700 MPa.

The compositions of the invention constitute a major technological advancement for a number of industries since the fibreboards prepared from fast-curing the compositions of the invention at low temperature have:

- internal bond strength of at least 0.4 MPa,
- modulus of rupture ($R_b$) of at least 10 MPa, and

- apparent modulus of elasticity (E) of at least 1700 MPa,

whereas the compositions of the state-of the-art upon fast-curing at low temperature resulted either in delamination or failed to meet the requirements for the internal bond strength, $R_b$ and E.

The invention is as set out in the claims. Many other variations, combinations and embodiments within the scope of the claims will be apparent to those skilled in the art.

**BRIEF DESCRIPTION OF THE FIGURES**

The specification contains two figures.

The figures are offered as an illustration only and not as a definition of the limits of the present disclosure.

To assist those of skill in the art in practicing the disclosed invention, reference is made to the accompanying figures:

Figure 1 is an illustration of a hyperbranched polylysine which has a DB of 0.4 and a theoretical (calculated) molecular weight of 3350.6 Da.

Figure 2 is an illustration of a primary ammonium salt of hyperbranched polylysine wherein the anion that counters some of the primary ammonium cations ($-NH_3^+$) present in the structure of the primary ammonium salt of hyperbranched polylysines is chloride, and wherein the primary ammonium salt of hyperbranched polylysine of Figure 2 has a DB of 0.4 and a theoretical (calculated) molecular weight of 3569.3 Da.

**DETAILED DISCLOSURE OF THE INVENTION**

The specification provides definitions for certain technical terms used in the specification and/or the claims. Any other technical term used in the specification and/or the claims that is not defined in the specification has the meaning attributed to it by one of ordinary skill in the art.

By the term 'lysine' is meant the a-amino acid having the following formula

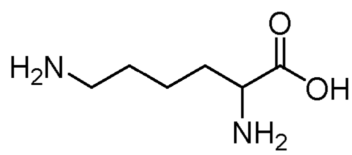

Any reference to 'lysine' in this specification refers to and encompasses both lysine's two enantiomeric forms, namely D- and L-lysine; 'L' and 'D' refer to the chirality at lysine's carbon atom which is directly linked to the carbon atom of the carboxylic group.

The degree of branching (DB) of a polylysine is determined via $^1$H-NMR spectroscopy and calculated according to the equation 1:

$$DB = \frac{2D}{2D + L}$$

(equation 1)

wherein

D is equal to or higher than 0, L is equal to or higher than 0, and at least one of the D and L is higher than 0; and wherein

D is the integral of the $^1$H-NMR peaks corresponding to the methine proton (shorthand for the proton to the tertiary carbon; indicated in bold in Formulae D1a and D1b) of any number of the following group(s) shown in Formulae D1a and D1b that may be present in the polylysine (if no such methine protons are present in the polylysine, the D is equal to zero):

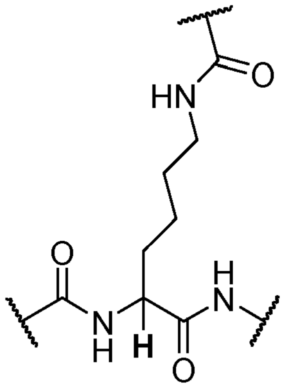

and

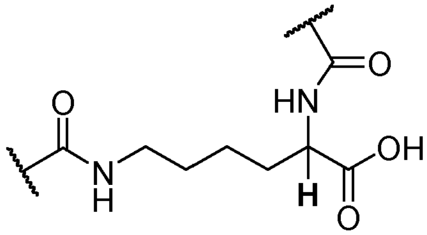

Formula D1a

Formula D1b

L represents the sum of $L_\alpha$ and $L_\varepsilon$, wherein $L_\alpha$ is the integral of the $^1$H-NMR peaks corresponding to the methine proton (shorthand for the proton to the tertiary carbon; indicated in bold in Formulae L1a and L1b) of any number of any one of the following group(s) shown in Formulae L1a and L1b that may be present in the polylysine (if no such methine protons are present in the polylysine, the $L_\alpha$ is equal to zero):

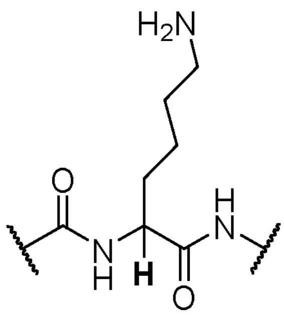

and

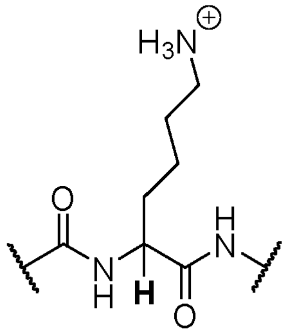

Formula L1a

Formula L1b

and

$L_\varepsilon$ is the integral of the $^1$H-NMR peaks corresponding to the methine proton (shorthand for the proton to the tertiary carbon indicated in bold in Formulae L2a and L2b) of any number of any one of the following group(s) shown in Formulae L2a and L2b that may be present in the polylysine (if no such methine protons are present in the polylysine, the $L_\varepsilon$ is equal to zero):

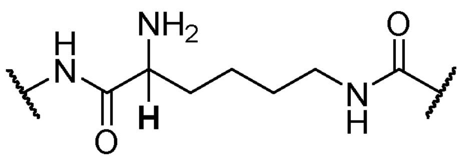

and

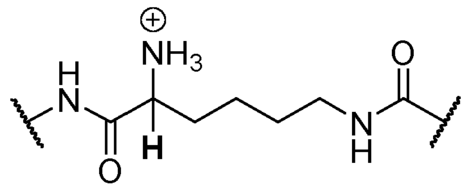

Formula L2a

Formula L2b

The DB ranges from and including 0 up to and including 1 (or equally the DB is at least 0 and at most 1).

By 'polylysine' is meant in the specification a polymer consisting of (reacted) lysine molecules which are linked by peptide bonds. The polylysine may be linear, branched or dendrimeric. Obviously, the degree of branching (DB) of a polylysine ranges from and including 0 up to and including 1 (or equally a polylysine has a DB of at least 0 and at most 1). Examples of polylysines include α-polylysines, ε-polylysines, hyperbranched polylysines, dendrimeric polylysines.

By 'primary ammonium salt of polylysine' is meant in the specification a polylysine (as the latter is defined in the specification) which contains in its structure at least one primary ammonium cation ($-NH_3^+$) which cation is countered by an anion, and wherein the primary ammonium cation is the cationized form of an amino group of the polylysine.

By 'α-polylysine' is meant in the specification a polymer which has the following formula A:

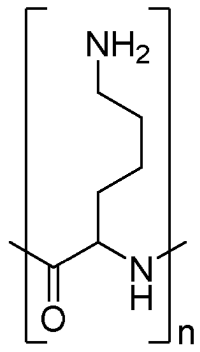

Formula A

wherein n is an integer equal or higher than 2, and a degree of branching (DB) equal to 0.

By 'primary ammonium salt of α-polylysine' is meant in the specification an α-polylysine (as the latter is defined in the specification) which contains in its structure at least one primary ammonium cation ($-NH_3^+$) which cation is countered by an anion, and wherein the primary ammonium cation is the cationized form of an amino group of the α-polylysine, and wherein the primary ammonium salt of α-polylysine has a degree of branching (DB) equal to 0.

By 'ε -polylysine' is meant in the specification a polymer which has the following formula B:

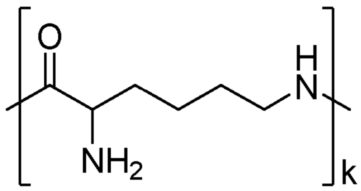

Formula B

wherein k is an integer equal or higher than 2, and a degree of branching (DB) equal to 0.

By 'primary ammonium salt of ε-polylysine' is meant in the specification an ε-polylysine (as the latter is defined in the specification) which contains in its structure at least one primary ammonium cation ($-NH_3^+$) which cation is countered by an anion, and wherein the primary ammonium cation is the cationized form of an amino group of the ε-polylysine, and wherein the primary ammonium salt of ε-polylysine has a degree of branching (DB) equal to 0.

By 'hyperbranched polylysine' is meant in the specification a polylysine which has a degree of branching (DB) higher than 0 and at most 0.99.

By 'primary ammonium salt of hyperbranched polylysine' is meant in the specification a hyperbranched polylysine (as the latter is defined in the specification) which contains in its structure at least one primary ammonium cation ($-NH_3^+$) which cation is countered by an anion, and wherein the primary ammonium cation is the cationized form of an amino group of the hyperbranched polylysine, and wherein the primary ammonium salt of hyperbranched polylysine has a degree of branching (DB) higher than 0 and at most 0.99.

By 'dendrimeric polylysine' is meant in the specification a polylysine that has a degree of branching (DB) higher than 0.99 and at most 1.

By 'primary ammonium salt of dendrimeric polylysine' is meant in the specification a dendrimeric polylysine (as the latter is defined in the specification) which contains in its structure at least one primary ammonium cation ($-NH_3^+$) which cation is countered by an anion, and wherein the primary ammonium cation is the cationized form of an amino group of the dendrimeric polylysine and wherein the primary ammonium salt of dendrimeric polylysine has a degree of branching (DB) higher than 0.99 and at most 1.

By 'peptide' is meant in the specification a polymeric compound other than the polylysines-X (and obviously other than the polylysine component), wherein said polymeric compound consists of one chain which has at least 2 and at most 50 amino acids linked by peptide bonds.

By 'protein' is meant in the specification a polymeric compound other than the polylysines-X (and obviously other than the polylysine component), wherein said polymeric compound consists of at least one chain which has at least 51 amino acids linked by peptide bonds.

By 'acetoacetoxy group' is meant in the specification an organic group which has the following formula C:

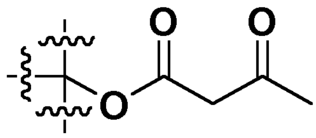

Formula C

By 'gel content' (referring to a polylysine) is meant in the specification the fraction of the polylysine which is insoluble upon storing the polylysine in water at room temperature (23 °C) for 24 hours. The gel content is determined as described in the Examples. A polylysine (for example any one of the polylysines-X of the polylysine component) with a gel content higher than 20 % is characterized as a 'crosslinked polylysine', whilst a polylysine (for example any one of the polylysines-X of the polylysine component) with a gel content of at most 20 % is characterized as a 'non-crosslinked polylysine'. The gel content is determined via the Gel-Content Method described in the Examples.

By the term 'flexural properties' (referring to an object e.g. fibreboards) is meant both the following material properties i) and ii): i) the modulus of rupture ($R_b$) and ii) the apparent modulus of elasticity (E). The flexural properties are determined via the Static Bending Method as described in the Examples.

By the term 'delamination' it is meant in the context of this invention a mode of failure where after heat-pressing of the corresponding composition the resulting material fractured into layers or pieces.

In the context of this invention the press time factor (in sec/mm) (abbreviated as PTF) is the press time (that is the time from closing to opening of the press) divided by the target thickness of a fibreboard; the target thickness refers to the thickness of the fibreboard at the end of the pressing step. For example, when a 12 mm fibreboard is made with a press time factor of 9 sec/mm, the press time was 108 sec.

In the context of this invention, the term 'fast-curing' (or equally 'fast-cured' or equally 'fast-cure') means a press time factor equal to 9 sec/mm.

In the context of this invention, the term 'low temperature' means 160 °C.

In the context of this invention the terms "synthetic cellulose fibers", "man-made cellulose fibers" or "manufactured cellulose fibers" or "artificial cellulose fibers" or "regenerated cellulose fibers" are used interchangeably and these terms are used to distinguish the synthetic cellulose fibers from the natural cellulose fibers and the natural lignocellulosic fibers, the latter two being vegetable fibers.

The term 'engineered wood' (also known as mass timber, composite wood, man-made wood, or manufactured board) includes a range of derivative wood products which are manufactured by binding or fixing together the various wood elements (e.g. fibers, filaments, yarns, strips, strands, threads, staple fiber yarns, particles, chips (e.g. wood chips, sawdust), shavings (e.g. sawmill shavings), flakes, lamellae, pulp (e.g. wood pulp), and mixtures thereof), via various methods of fixation to form effectively a composite material. Exemplary types of engineered wood include but are not limited to plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites.

The term 'fibreboard' as used in the specification encompasses low-density fibreboard (LDF; known also as particle board or chip board), and medium-density fibreboard (MDF), and high-density fibreboard (HDF; known also as waferboard, flakeboard)].

By the term 'wood chips' is meant in the specification chipped woody biomass in the form of pieces with a defined particle size produced by mechanical treatment with sharp tools such as knives (ISO 16559-2014; §4.226). The particle size distribution of the wood chips is determined via oscillating screen method using sieves with apertures of 3.15 mm and above according to the ISO 17827-1:2016. According to this standard (ISO 17827-1:2016) the median value of the particle size distribution (d50) is reported and is defined as the calculated particle size of a sample where 50 % of the particle mass is below and 50 % is above. Graphically the median value is established by the intersection of the cumulative distribution curve with the 50 % line (X axis: particle/hole size (mm) and Y-axis: accumulated % of weight (%)].

By 'room temperature' is meant herein 23± 0.5 °C.

By 'atmospheric pressure' is meant in the specification pressure of 1 atm (1 atm= 101325 Pa).

By 'standard conditions' is meant in the specification room temperature and atmospheric pressure, collectively.

By 'lower than' is meant in the specification that the relevant maximum boundary value is not included in the range.

By 'higher than' is meant in the specification that the relevant minimum boundary value is not included in the range.

By 'rpm' is meant revolutions per minute.

The decimal separator in numbers (also known as the radix character) is indicated with a period ('.').

By 'pph' is meant in the specification weight parts per one hundred weight parts.

The wavy lines shown in any one of the formulae shown in the specification and relate to the XL-component signify that the molecular structure beyond the point indicated by the wavy line, is not specified.

Every constituent and every component of the compositions of the invention is different and distinct from any other component and constituent of the composition of the invention.

The total sum of any quantities expressed as percentages, in the specification including the claims, cannot (allowing for rounding errors) exceed 100 wt% of the composition. For example the sum of all components of which the composition of the invention (or part(s) thereof) comprises may, when expressed as a weight (or other) percentage of the composition (or the same part(s) thereof), total 100 wt% allowing for rounding errors. However where a list of components is non-exhaustive the sum of the percentage for each of such components may be less than 100 wt% to allow a certain percentage for additional amount(s) of any additional component(s) that may not be explicitly described herein.

All combinations of minimum and maximum values of the parameters disclosed in the specification may be used to define the parameter ranges for various preferments or embodiments of the invention.

For all upper and lower boundaries of any parameters given herein, the boundary value is included in each range for each parameter. All combinations of minimum and maximum values of the parameters described herein may be used to define the parameter ranges for various embodiments and preferences of the invention.

Unless otherwise explicitly stated, any feature, element, component, embodiment, range and especially any preferred feature, preferred element, preferred embodiment, preferred range, preferred combination of ranges, preferments, and embodiments of the invention as these are disclosed in the entire specification including the claims can be combined with each other.

Unless the context indicates otherwise, the plural forms of the terms in the specification are construed as including the singular form and vice versa.

Certain moieties, species, groups, repeat units, compounds, oligomers, polymers, materials, mixtures, compositions and/or formulations which comprise and/or are used in some or all of the invention as described in the specification may exist as one or more different forms such as any of those in the following non-exhaustive list: stereoisomers (such as enantiomers (e.g. E and/or Z forms), diastereoisomers and/or geometric isomers); tautomers (e.g. keto and/or enol forms). The invention comprises and/or uses all such forms which are effective as defined in the specification.

This section (Detailed Disclosure of the Invention) together with the claims provides for the disclosure of the invention as well as for explicit preferments and embodiments of the claimed invention; thus, the disclosure presented in this section, along with these explicit preferments and embodiments disclosed in this section are within the scope of the claimed invention.

The invention provides for a composition as described in claim 1. The subject matter of this paragraph is mentioned in the specification as 'A0'.

More particularly, the invention provides for a composition comprising a constituent-A, which constituent-A consists of:

- a polylysine component,
- a XL-component, and
- a fibrous component,

wherein

the polylysine component selected from the group consisting of polylysines-X and mixtures thereof, and wherein the polylysines-X are selected from the group consisting of hyperbranched polylysines and primary ammonium salt of hyperbranched polylysines, preferably the polylysines-X are selected from the group consisting of hyperbranched polylysines, wherein each one of the polylysines-X has a degree of branching determined by $^1$H-NMR spectroscopy as disclosed in the specification, of at least 0.30 and at most 0.60, an apparent viscosity determined by the Rheometry Method as disclosed in the specification, of at least 400 and at most 8000 mPa.s, and a gel content determined by the Gel-Content Method as disclosed in the specification, of at most 4.0, preferably at most 3.0, more preferably at most 2.0, even more preferably at most 1.0, even more preferably at most 0.5, for example at most 0.4, for example at most 0.3, for example at most 0.2, for example at most 0.1, for example at most 0.05, for example at most 0.04, for example at most 0.03, for example at most 0.02, for example at most 0.015 %, for example the gel content is 0.0 %.
and
the XL-component is selected from the group consisting of is selected from the group consisting of monomeric or polymeric compounds each of which has at least two, preferably at least three, more preferably at least four, even more preferably at least five, most preferably at least six, especially at least seven XL-groups per molecule, wherein the XL-groups are selected from the group consisting of groups according to the formula XL1 (herein also mentioned XL1-groups), and groups according to the formula XL2 (herein also mentioned as XL2-groups),

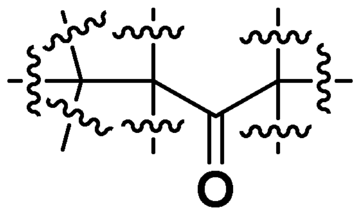
Formula XL1

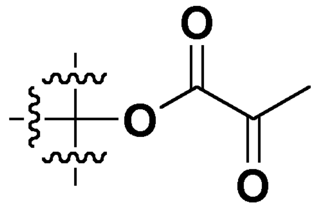
Formula XL2

preferably the XL-groups are selected from the group consisting of groups according to the formula XL2 and groups according to the formula XL1a

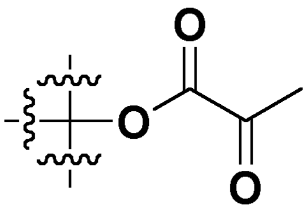
Formula XL2

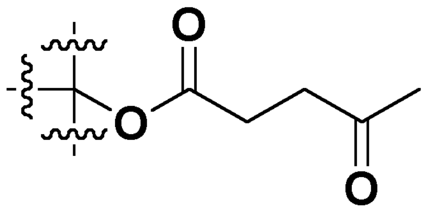
Formula XL1a

preferably the XL-groups are selected from the group consisting of groups according to the formula XL1a

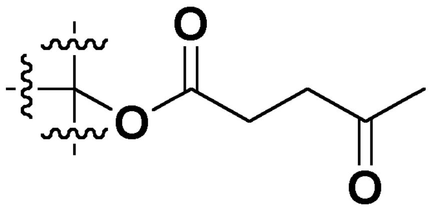
Formula XL1a

preferably the XL-groups are selected from the group consisting of groups according to the formula XL2

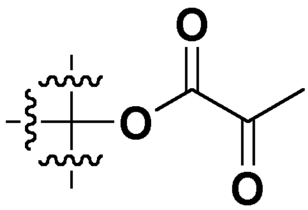
Formula XL2

preferably, the XL-component is a polymeric compound having at least two, preferably at least three, more preferably at least four, even more preferably at least five, most preferably at least six, especially at least seven XL-groups per molecule wherein the XL-groups are selected from the group consisting of groups according to the formula XL1, and groups according to the formula XL2; preferably, the XL-component is a monomeric compound having at least two, preferably at least three, more preferably at least four, even more preferably at least five, most preferably at least six, especially at least seven XL-groups per molecule wherein the XL-groups are selected from the group consisting of groups according to the formula XL1, and groups according to the formula XL2; preferably, the XL-component is a polymeric compound having at least two, preferably at least three, more preferably at least four, even more preferably at least five, most preferably at least six, especially at least seven XL-groups per molecule wherein the XL-groups are selected from the group consisting of groups according to the formula XL2 and groups according to the formula XL1a;

preferably, the XL-component is a monomeric compound having at least two, preferably at least three, more preferably at least four, even more preferably at least five, most preferably at least six, especially at least seven XL-groups per molecule wherein the XL-groups are selected from the group consisting of groups according to the formula XL2 and groups according to the formula XL1a; preferably, the XL-component is a polymeric compound having at least two, preferably at least three, more preferably at least four, even more preferably at least five, most preferably at least six, especially at least seven XL-groups per molecule wherein the XL-groups are selected from the group consisting of groups according to the formula XL1a; preferably, the XL-component is a monomeric compound having at least two, preferably at least three, more preferably at least four, even more preferably at least five, most preferably at least six, especially at least seven XL-groups per molecule wherein the XL-groups are selected from the group consisting of groups according to the formula X1a; preferably, the XL-component is a polymeric compound having at least two, preferably at least three, more preferably at least four, even more preferably at least five, most preferably at least six, especially at least seven XL-groups per molecule wherein the XL-groups are selected from the group consisting of groups according to the formula XL2; preferably, the XL-component is a monomeric compound having at least two, preferably at least three, more preferably at least four, even more preferably at least five, most preferably at least six, especially at least seven XL-groups per molecule wherein the XL-groups are selected from the group consisting of groups according to the formula XL2; and

the fibrous component consists of at least one fibrous element which fibrous element comprises vegetable fibers, and wherein the fibrous element is free of any fibers other than the vegetable fibers,

and

wherein

the composition is free of any fibers other than the vegetable fibers of the fibrous component, and

wherein

the constituent-A is present in an amount of at least 10 and at most 100, preferably at least 20 and at most 100, more preferably at least 30 and at most 100, even more preferably at least 40 and at most 100, for example at least 50 and at most 100, for example at least 60 and at most 100, for example at least 70 and at most 100, for example at least 80 and at most 100 wt% of the composition, and

wherein

the polylysine component is present in an amount of at least 3.0 and at most 15.0, preferably at least 3.0 and at most 12.0, more preferably at least 3.0 and at most 10.0 wt% of the composition, and

wherein

the weight ratio K defined as the weight amount of the XL-component divided by the weight amount of the polylysine component is at least 0.05 and at most 5.0, preferably at least 0.05 and at most 3.0, for example at least 0.05 and at most 2.0, for example at least 0.05 and at most 1.0, for example at least 0.05 and at most 0.5.

The subject matter of this paragraph is mentioned in the specification as 'A1'.

For illustration, Figure 1 depicts a hyperbranched polylysine which has a DB of 0.4 and a theoretical (calculated) molecular weight of 3350.6 Da while Figure 2 depicts a primary ammonium salt of hyperbranched polylysine wherein the anion that counters some of the primary ammonium cations ($-NH_3^+$) present in the structure of the primary ammonium salt of hyperbranched polylysines is chloride, and wherein the primary ammonium salt of hyperbranched polylysine of Figure 2 has a DB of 0.4 and a theoretical (calculated) molecular weight of 3569.3 Da.

Lysine (in either of its two enantiomeric forms, namely D- and L-lysine; 'L' and 'D' refer to the chirality at lysine's central carbon atom) which is the precursor amino acid, contains two amino groups; one at the $\alpha$-carbon and one at the $\varepsilon$-carbon. Either of these two amino groups can be the location of polymerization. In principle polylysines are formed from lysine or lysine salt [L-lysine, D-lysine, or any mixture thereof of L-lysine, e.g. a racemic mixture; or L-lysine salt , D-lysine salt or any mixture thereof e.g. a racemic mixture) in a polycondensation reaction in which water is released when an amino group of one lysine molecule and a carboxyl group of another lysine molecule react with each other to form an amide bond under production of water. The removal of water from the reaction mixture favours the polylysine formation.

Hyperbranched polylysines may be prepared via various processes. In principle the processes for preparing hyperbranched polylysines may be categorized in four major categories: i) processes based on the ring opening addition polymerization of e-protected L-lysine-N-carboxyanhydrides (NCAs) with a nucleophilic starter, ii) processes where derivatives of L-lysine*xHCl that are activated on the carboxyl group, are used, iii) processes involving the direct thermal addition polymerization of L-lysines, and iv) processes where in the presence of at least one catalyst selected from the group consisting of tertiary amines, basic alkali metal salts, alkaline earth metal salts, quaternary ammonium salts, alkoxides, alkanoates, chelates, organometallic compounds of metal groups IIIA to VIIIA or IB to VB in the Periodic Table of Elements, a salt of lysine with at least one acid is involved. The following paragraphs in this section provide for some examples of processes for preparing hyperbranched polylysines e.g. hyperbranched polylysines reading on the claimed invention.

Hyperbranched polylysines can be prepared by what is called the $AB_2$ route. An $AB_2$ molecule is a term used to

refer to a trifunctional monomer containing one reactive group A and two reactive groups B; Where these groups A and B are reactive with one another, hyperbranched polymers can be produced by intermolecular reaction. Lysine is an example of such a trifunctional monomer where the reactive group A is the carboxyl group and each of the two reactive groups B is the amino group of the lysine and where these A and B groups in the lysine are reactive with one another; thus, an $AB_2$ polymerization route of lysine leads to hyperbranched polylysines.

Hyperbranched polylysines can also be prepared as follows: a reactor, e.g. a glass-reactor equipped with a distillation set-up is charged with L-lysine in water (50 wt%). Upon the completion of the charge of the reactor with L-lysine in water (50 wt%), the reactor is slowly (over 2- 8 hours) heated up to 120-190 °C (the slow increase in temperature is essential to avoid precipitation of unreacted L-lysine in the reactor, which can occur if too much water has distilled off before sufficient reaction conversion). When the desired reaction temperature has been reached, the reaction then proceeds for 2-30 hours at the desired temperature. Optionally, L-lysine in water (50 wt%) can be added to the reactor as water is being distilled off, in order to maintain the reactor's filling at a certain level. The reaction is monitored by taking samples over regular time periods, diluting the samples to 60 wt% in water, and measuring the apparent viscosity. When the apparent viscosity of these samples is at the desired viscosity, the reaction mixture is discharged. If necessary, water can be added to the reaction mixture prior to discharging in order to yield a product with the desired solids content and apparent viscosity. The reactor that may be used in this process can be a high-pressure reactor. If a high-pressure reactor is used in this process, then said high-pressure reactor, equipped with a distillation set-up which distillation set-up is connected to the reactor via a pressure release valve, is charged with L-lysine in water (50 wt%). Upon charging the high-pressure reactor with L-lysine in water (50 wt%), the pressure in the high-pressure reactor starts to build up while the pressure release valve is closed off and the reactor is heated up to 120-190 °C. The pressure in the reactor is preferably maintained between 1-6 bar (1 bar= 100000 Pa) during the reaction; this preferred pressure range is also maintained during the reaction when the pressure release valve is being carefully and periodically opened and closed to allow for the distillation of water and some pressure release. When the desired reaction temperature has been reached, the reaction then proceeds for 2-30 hours at the desired temperature. Optionally, L-lysine in water (50 wt%) can be added to the reactor as water is being distilled off, in order to maintain the reactor's filling at a certain level. The reaction is monitored by taking samples over regular time periods, diluting the samples to 60wt% in water, and measuring the apparent viscosity. When the apparent viscosity of these samples is at the desired viscosity, the reaction mixture is discharged. If necessary, water can be added to the reaction mixture prior to discharging in order to yield a product with the desired solids content and apparent viscosity. The preparation of hyperbranched polylysines in agreement with the invention shown in the Examples offer examples of the processes described above in this paragraph.

Another way for preparing hyperbranched polylysines, uses L-lysine hydrochloride as starting material. The polymerisation of L-lysine hydrochloride was performed as follows: L-lysine hydrochloride (550 g, 3 mol) and NaOH (120 g, 3 mol) are added to a 1-L glass reactor with a distillation set-up. This reactor is heated to 120-190 °C and stirred for 2 to 30 hours. In order to follow the reaction, samples are taken every few hours, dissolved in water to a 60 wt% solids content, and the apparent viscosity measured. To discharge, water (the amount added is calculated so the reaction mixture will have a resultant solid content of 70-80 wt%) is added dropwise to the reactor and as water is added the temperature is lowered to 90 °C. The resultant reaction mixture in water (solid content 70-80 wt%) is then discharged at 90 °C.

Another way for preparing hyperbranched polylysines, uses L-lysine hydrochloride and L-lysine as starting materials. According to this L-lysine in water (50 wt%) (409.4 g, 1.4 mol), L-lysine hydrochloride (255.7 g, 1.4 mol), and NaOH (55.8 g,1.4 mol) were added to a 1-L glass reactor. This reactor is heated to 120-190 °C and stirred for 2 to 30 hours. In order to follow the reaction, samples are taken every few hours, dissolved in water to a 60 wt% solids content, and the apparent viscosity measured. To discharge, water (the amount added is calculated so the reaction mixture will have a resultant solid content of 70-80 wt%) is added dropwise to the reactor and as water is added the temperature is lowered to 90 °C. The resultant reaction mixtures in water (solid content 70-80 wt%) is then discharged at 90 °C.

A yet another process for preparing hyperbranched polylysines is based on the ring-opening addition polymerization of ε-protected L-lysine-N-carboxyanhydrides (NCAs) with a nucleophilic starter. Examples of this process were disclosed by Klok et al., in WO 2003/064452 and in Macromolecules 2002, 35, 8718-8723 and by Rodriguez-Hernandez et al. in Biomacromolecules 2003, 4, 249-258. According to the latter, a mixture of $N^e$-trifluoroacetyl-L-lysine-NCA (TFA-Lys-NCA) and Z-lysine-NCA were subjected to ring-opening polymerization with an aliphatic amine. In a separate coupling step $N^{\alpha}$,$N^{\varepsilon}$-di(9-fluorenyl-methoxycarbonyl)-L-lysine ($N^{\alpha}$,$N^{\varepsilon}$-diFmoc Lys) was introduced as a branching point. Deprotection with piperidine in dimethyl formamide (DMF) gave two new amine groups, which allowed ring-opening polymerization of TFA-Lys-NCA and Z-Lys-NCA. These reaction cycles were repeated a number of times. Structurally similar hyperbranched block copolymers have also been described by Birchall et al. in Chem. Commun. 1998, 1335-1336. a-Amino acid NCAs were subjected to ring-opening polymerization with an aliphatic amine. N,N'-Di(benzyloxycarbonyl)-L-lysine p-nitrophenyl ester was introduced as a branching point, and after deprotection of $H_2$/Pd/C had two free amine groups for the further ring opening of amino acid NCAs. These reaction cycles were repeated a number of times.

A yet another process for preparing hyperbranched polylysines is based on derivatives of L-lysine*2HCl which are activated on the carboxyl group. According to this process hyperbranched polylysines were prepared in a one-pot

synthesis with activation of the carboxyl group by means of N-hydroxy succinimide (NHS). NHS-activated L-lysine*2HCl was stirred for 23 hours in dimethyl sulfoxide (DMSO) with the addition of catalytic amounts of dimethyl aminopyridine (DMAP) and 3 equivalents of diisopropyl-ethylamine (DIEA), and the polymer was precipitated from ethyl acetate.

A yet another process for preparing hyperbranched polylysines is based the thermal addition copolymerization of amino acid mixtures. The thermal addition polymerization of free lysine is known and has been carried out under various reaction conditions. Plaquet and co-workers (Biochimie 1975, 57 1395-1396) polymerized L-lysine in aqueous solution at 105 °C for a period of up to 10 weeks, or else by heating at 165 °C for 8 hours. The reaction was carried out without catalyst and the yields, at below 72.5 % without exception, were very low. Harada (Bull. Chem. Soc. Japan 1959, 32, 1007-1008) polymerized L-lysine at 180 to 230 °C for between 30 minutes and 2 hours under a nitrogen atmosphere. Rohlfing and co-workers (Archives of Biochemistry and Biophysics 1969, 130, 441-448) polymerized L-lysine (free base) under a nitrogen atmosphere at between 186 and 192 °C. WO 00/71600 described the condensation of L-lysine monohydrate in a pressure apparatus. Fox et al. (BioSystems 1976, 8, 40-44) used not only L-lysine but also L-lysine*HCI as starting monomers for the thermal polymerization at 195 °C. L-Lysine*HCI was brought to reaction with the addition of orthophosphoric acid at 195 °C.

US 8846842 B2 disclosed yet another process for preparing polylysines that does not require protective-group operations or activation of carboxyl groups and in which it is also possible to attain higher molecular weights than those known from the prior art. The object has been achieved by means of a process for preparing non-crosslinked hyperbranched polylysines by reacting:

(A) a salt of lysine with at least one acid,
(B) if appropriate, at least one amino acid other than lysine,
(C) if appropriate, at least one dicarboxylic or polycarboxylic acid or copolymerizable derivatives thereof and
(D) if appropriate, at least one diamine or polyamine or copolymerizable derivatives thereof,
(E) if appropriate, in at least one solvent at a temperature from 120 to 200 °C in the presence of at least one catalyst (F) selected from the group consisting of (F1) tertiary amines and amidines, (F2) basic alkali metal salts, alkaline earth metal salts or quaternary ammonium salts, and (F3) alkoxides, alkanoates, chelates or organometallic compounds of metals from groups IIIA to VIIIA or IB to VB in the Periodic Table of the Elements. With this process it is possible to prepare non-crosslinked hyperbranched polylysines having a weight average molecular weight $M_w$ of up to 750000 Da.

Hyperbranched polylysines can, for example, be synthesized by direct thermal addition polymerization of L-lysine or ammonium salts of L-lysine. The thermal addition polymerization of lysine is carried out in the absence of solvent. WO 2007/060119 described the polycondensation of L-lysine hydrochloride in the presence of sodium hydroxide, water (10 wt% based on the L-lysine hydrochloride) and the catalyst dibutyltin dilaurate. The mixture was heated with stirring to an internal temperature of 150 °C. After a reaction time of 5 hours, water was distilled off under reduced pressure (200 mbar), and after the major amount of water was removed the temperature was slowly raised to 180 °C and the pressure was reduced to 10 mbar. After 8 hours, 240 g of water distillate had been collected. Hennon et al. (Biochimie 1971, 53, 215-223) described the preparation of a brown resin starting from an aqueous solution of lysine (50 wt%). The solution was concentrated by evaporation at 105 °C to 110 °C and then kept at 165 °C to 170 °C while it was agitated by directing a weak preheated nitrogen stream through it. The brown resin was obtained after 8 hours at 165 to 170 °C. Ho et al. described the synthesis of polylysine by thermally heating an aqueous lysine solution for two days at 160 °C. The obtained polylysine had a degree of branching between 0.50 and 0.54. When using microwave assisted heating at 200 °C, the obtained polylysine had a degree of branching between 0.30 and 0.32. US 2013/0123148 disclosed the preparation of polylysine by heating an aqueous lysine solution in the presence of catalytical amounts of dibutyltin dilaurate. According to the examples of US 2013/0123148, the obtained polylysines had a degree of branching above 0.30.

WO 2016/062578 A1 disclosed a process for the preparation of hyperbranched polylysines suitable for large scale production of polylysine with improved yield. According to the WO 2016/062578 A1 polylysines can be prepared by a process comprising the steps of: (a) heating a boiling aqueous reaction mixture comprising lysine and water in a weight ratio of 1:10 to 3:1 within 2 to 8 hours, for example within 4 to 8 hours, to a temperature in the range from 135 to 165 °C, and (b) keeping the reaction mixture of step (a) at a temperature in a range from 135 to 165 °C at a pressure below atmospheric pressure, wherein water is removed from the mixture, and any temperature increase is less than or equal to 30 °C in 60 minutes. Customary technical aqueous lysine solutions can be used in the process as disclosed in WO 2016/062578 A1 and no catalyst is required. At the end of the second step, the mixture is in a liquid state, e.g., a melt of polylysine, not a resin. Preferably, the aqueous starting mixture is an aqueous solution of lysine in water. The lysine comprised by the aqueous starting mixture can be L-lysine, D-lysine, or any mixture of L-lysine and D-lysine, e.g. a racemic mixture. The aqueous starting mixture can, for example, be an aqueous solution of L-lysine in water that contains 50 wt% of L-lysine and 50 wt% of water; e.g., ADM Liquid L-Lysine, Product Code: 035101 supplied by Archer Daniels Midland, Sewon L- Lysine® 50 percent liquid feed supplied by Paik Kwang, or BestAmino™ L-Lysine liquid feed grade supplied by CJ CheilJedang.

Polylysine is formed from lysine in a polycondensation reaction in which water is released when an amino group of one lysine molecule and a carboxyl group of another lysine molecule react with each other to form an amide bond under production of water. The removal of water from the reaction mixture favors the formation of the polylysine. In general, the temperature of the reaction mixture is increased continuously. The process as disclosed in WO 2016/062578 A1 requires that water is removed from the reaction mixture. Any means suitable for removing water may be applied in order to remove water from the reaction mixture. Water is preferably evaporated from the mixture. The water is most preferably removed from the mixture by distillation. This process requires a pressure below atmospheric pressure in the second step. The pressure reduction facilitates the evaporation of water and thus accelerates the polycondensation reaction. According to the WO 2016/062578 A1 the weight average molecular weight and number average molecular weight of the polylysine depends on the overall duration of the process and the temperature of the reaction mixture. If the reaction mixture is kept for longer times at higher temperatures, crosslinking is more likely to occur. Preferably, the process is carried out without a catalyst. The process may be carried out continuously or, preferably, batchwise. The process is preferably carried out in what is called a one-pot mode, in which the lysine is included in its entirety in the initial charge and the polycondensation reaction is carried out in a reactor with back-mixing. Also suitable, however, are reaction regimes in a multistage reactor system, a stirred-tank cascade, or in a tube reactor.

The primary ammonium salt of hyperbranched polylysines can for example be prepared via protonation of the amino groups of a hyperbranched polylysine with for example acidic agents e.g. protic acids, alkenylcarboxylic acids, alkylsulfonic acids. In the context of this specification the agents that may be used for the preparation of the primary ammonium salt of polylysines are called 'protonation agents'. Such protonation, results in a primary ammonium salt of hyperbranched polylysine that contains in its structure at least one primary ammonium cation ($-NH_3^+$) which cation is countered by an anion, and wherein the primary ammonium cation is the cationized form of an amino group of the hyperbranched polylysine. The structure of the anion depends on the reactant used for the protonation of the amino groups of the hyperbranched polylysine; exemplary anions include but are not limited to halide anions (e.g. fluoride, chloride, bromide, iodide) carboxylate anions, sulfonate anions. Preferably the anion is selected from the group consisting of halide anions, carboxylate anions, sulfonate anions, more preferably the anion is selected from the group consisting of halide anions, and carboxylate anions, even more preferably the anion is selected from the group consisting of halide anions, for example the anion is selected from the group consisting of fluoride, chloride, bromide, iodide, for example the anion is selected from the group consisting of chloride, bromide, iodide, for example the anion is selected from the group consisting of chloride and bromide, for example the anion is chloride.

The XL-component is able to react with the polylysine component via the XL-groups. The members of the XL-component may be prepared via several processes. For example they may be prepared:

- either by reacting diacetone acrylamide (DAAM) with styrene and/or acrylates and/or methacrylates via emulsion polymerization at temperatures between 50 °C and 100 °C in the presence of a suitable free-radical initiator, to afford polymeric compounds having XL1 groups,
- or by reacting polyol compounds with polycarboxylic acids in the presence of mono functional acid compounds like pyruvic acid or levullinic acid at polymerization temperatures between 100°C and 250°C in the presence of a esterification catalyst like for example a strong acid, to afford polymeric compounds having XL1 groups.

Some specific examples demonstrating how one may prepare a polymeric compound having at least two groups according to formula XL1 are disclosed below in examples i) and ii) in this paragraph. According to example i): a 2000 $cm^3$ flask equipped with a thermometer, $N_2$ inlet and overhead stirrer is charged with demineralized water (656.8 g) and sodium lauryl sulphate (19.3 g of a 30 wt% solution in water). In a funnel an emulsified monomer feed is prepared by mixing demineralized water (278.1 g), sodium lauryl sulphate (28.9 g of a 30 wt% solution in water), Styrene (S, 313.8 g), 2-ethylhexyl acrylate (2-EHA, 312.5 g), diacetone acrylamide (DAAM, 41.3 g), methacrylic acid (MAA, 20.64 g) and n-dodecyl mercaptan (n-DM, 13.8 g). In another funnel an initiator solution is charged by dissolving ammonium persulphate (AP, 2.3 g) in demineralized water (68.6 g) and adjusting the pH with 25% ammonia to 7.0-7.5. The reactor is heated to 65 °C and 10 wt% of the emulsified monomer feed is added to the reactor and the reaction temperature is allowed to increase to 75 °C. At 75 °C a shot of ammonium persulphate (1.2 g) dissolved in demineralized water (6.0 g) is added and the exotherm is allowed to run. After mixing for 10 minutes the reactor temperature is levelled at 85 °C. Next, the monomer feed and initiator feed is added over a period of 150 minutes at a temperature of 83-87 °C. At the end of the monomer feed demineralized water (7.4 g) is used to rinse the funnel holding the monomer mixture. The reaction is allowed to drift for 15 minutes to 80 °C . Next, a solution of ammonia (25%, 4.5 g) in demineralized water (4.5 g) is added and the temperature is allowed to drift for 15 minutes. Next the batch is cooled to 30 °C and Proxel Ultra 10 (3.6 g of a 10 wt% solution) is added in 10 minutes. The pH is checked and if needed adjusted to 7.0-8.0 with ammonia (12.5%). Finally, the batch is filtered through a filter cloth to remove any coagulum formed during the reaction. According to example ii): a 2000 $cm^3$ flask equipped with a thermometer, $N_2$ inlet and overhead stirrer is charged with demineralized water (656.8 g) and sodium lauryl sulphate (19.3 g of a 30 wt% solution in water). In a funnel an emulsified monomer feed is prepared by mixing

demineralized water (278.1 g), sodium lauryl sulphate (28.9 g of a 30 wt% solution in water), methyl methacrylate (MMA, 321.6 g), n-butyl acrylate (n-BA, 304.7 g), diacetone acrylamide (DAAM, 41.3 g), methacrylic acid (MAA, 20.64 g) and n-dodecyl mercaptan (n-DM, 13.8 g). In another funnel an initiator solution is charged by dissolving ammonium persulphate (AP, 2.3 g) in demineralized water (68.6 g) and adjusting the pH with 25% ammonia to 7.0-7.5. The reactor is heated to 65 °C and 10 wt% of the emulsified monomer feed is added to the reactor and the reaction temperature is allowed to increase to 75 °C. At 75 °C a shot of ammonium persulphate (1.2 g) dissolved in demineralized water (6.0 g) is added and the exotherm is allowed to run. After mixing for 10 minutes the reactor temperature is levelled at 85 °C. Next, the monomer feed and initiator feed is added over a period of 150 minutes at a temperature of 83-87 °C. At the end of the monomer feed demineralized water (7.4 g) is used to rinse the funnel holding the monomer mixture. The reaction is allowed to drift for 15 minutes to 80 °C . Next, a solution of ammonia (25%, 4.5 g) in demineralized water (4.5 g) is added and the temperature is allowed to drift for 15 minutes. Next the batch is cooled to 30 °C and Proxel Ultra 10 (3.6 g of a 10 wt% solution) is added in 10 minutes. The pH is checked and if needed adjusted to 7.0-8.0 with ammonia (12.5%). Finally, the batch is filtered through a filter cloth to remove any coagulum formed during the reaction.

Commercially available XL-components include but are not limited to Neocryl XK-12®, Neocryl XK-14®, Neocryl XK-98®, Neocryl XK-234® and Neocryl XK-237® available by Covestro.

Examples of XL-component are also shown in the Examples.

Preferably the composition is as disclosed in A0 or in A1 or as in any combination derived from the disclosure in this section and the entire specification including the claims, wherein each one of the polylysines-X has a degree of branching determined by $^1$H-NMR spectroscopy as disclosed in the specification, of at least 0.30 and at most 0.55, more preferably at least 0.30 and at most 0.50, even more preferably at least 0.30 and at most 0.45. The subject matter of this paragraph is mentioned in the specification as 'A2'.

Preferably the composition is as disclosed in A0 or in any one of A1 to A2 or as in any combination derived from the disclosure in this section and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of halide anions, carboxylate anions and sulfonate anions; more preferably the composition is as disclosed in A0 or in any one of A1 to A2 or as in any combination derived from the disclosure in this section and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of halide anions and carboxylate anions; more preferably the composition is as disclosed in A0 or in any one of A1 to A2 or as in any combination derived from the disclosure in this section and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of halide anions; even more preferably the composition is as disclosed in A0 or in any one of A1 to A2 or as in any combination derived from the disclosure in this section and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of fluoride, chloride, bromide and iodide; most preferably, the composition is as disclosed in A0 or in any one of A1 to A2 or as in any combination derived from the disclosure in this section and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of chloride, bromide and iodide; especially, the composition is as disclosed in A0 or in any one of A1 to A2 or as in any combination derived from the disclosure in this section and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of chloride and bromide; more especially, the composition is as disclosed in A0 or in any one of A1 to A2 or as in any combination derived from the disclosure in this section and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is chloride. The subject matter of this paragraph is mentioned in the specification as 'A3'.

Preferably the composition is as disclosed in A0 or in any one of A1 to A3 or as in any combination derived from the disclosure in this section and the entire specification including the claims, wherein each one of the polylysines-X has an

apparent viscosity determined by the Rheometry Method as disclosed in the specification of at least 400 and at most 8000, preferably at least 400 and at most 6000, more preferably at least 400 and at most 4000, even more preferably at least 400 and at most 2500, most preferably at least 400 and at most 2000, for example at least 400 and at most 1800, for example at least 400 and at most 1550, for example at least 450 and at most 8000, for example at least 450 and at most 6000, for example at least 450 and at most 4000, for example at least 450 and at most 2000, for example at least 450 and at most 1800, for example at least 450 and at most 1550 mPa.s. The subject matter of this paragraph is mentioned in the specification as 'A4'.

Preferably the composition is as disclosed in A0 or in any one of A1 to A4 or as in any combination derived from the disclosure in this section and the entire specification including the claims, wherein each one of the polylysines-X has an amine number (abbreviated as AN) determined by the Titration Method as disclosed in the specification that is higher than its acid value (abbreviated as AV) determined by the Titration Method as disclosed in the specification. The subject matter of this paragraph is mentioned in the specification as 'A5'.

Preferably the composition is as disclosed in A0 or in any one of A1 to A5 or as in any combination derived from the disclosure in this section and the entire specification including the claims, wherein each one of the polylysines-X has a number average molecular weight (abbreviated as $M_n$) determined by the Gel-Permeation Chromatography Method-1 as disclosed in the specification, of at least 1100 and at most 10000 Da, preferably at least 1500 and at most 8000 Da, more preferably at least 2000 at most 6000 Da. The subject matter of this paragraph is mentioned in the specification as 'A6'.

Preferably the composition is as disclosed in A0 or in any one of A1 to A6 or as in any combination derived from the disclosure in this section and the entire specification including the claims, wherein each one of the polylysines-X has weight average molecular weight (abbreviated as $M_w$) determined by the Gel-Permeation Chromatography Method-1 as disclosed in the specification, of at least 3000 and at most 50000 Da, preferably at least 5000 and at most 40000 Da, more preferably at least 10000 and at most 30000 Da. The subject matter of this paragraph is mentioned in the specification as 'A7'.

Preferably the composition is as disclosed in A0 or in any one of A1 to A7 or as in any combination derived from the disclosure in this section and the entire specification including the claims, wherein each one of the polylysines-X has an amine number (abbreviated as AN) determined by the Titration Method as disclosed in the specification, of at least 200 and at most 700 mg KOH/g, preferably at least 250 and at most 600 mg KOH/g, more preferably at least 250 and at most 500 mg KOH/g, especially at least 300 and at most 400 mg KOH/g. The subject matter of this paragraph is mentioned in the specification as 'A8'.

Preferably the composition is as disclosed in A0 or in any one of A1 to A8 or as in any combination derived from the disclosure in this section and the entire specification including the claims, wherein each one of the polylysines-X has an acid value (abbreviated as AV) determined by the Titration Method as disclosed in the specification, of at least 10 and at most 150, preferably at least 10 and at most 100, for example at least 10 and at most 90, for example at least 30 and at most 150, for example at least 30 and at most 100, for example at least 30 and at most 90 mg KOH/g. The subject matter of this paragraph is mentioned in the specification as 'A9'.

Preferably the composition is as disclosed in A0 or in any one of A1 to A9 or as in any combination derived from the disclosure in this section and the entire specification including the claims, wherein each one of the polylysines-X independently has an amine number (AN) determined by the Titration Method as disclosed in the specification, of at least 50 and at most 2000, preferably at least 50 and at most 1500, more preferably at least 50 and at most 1200, for example at least 50 and at most 1000, for example at least 50 and at most 900, for example at least 50 and at most 800, for example at least 150 and at most 600, for example at least 200 and at most 500, for example at least 200 and at most 450, for example at least 200 and at most 400, for example at least 250 and at most 400 mg KOH/g. The subject matter of this paragraph is mentioned in the specification as 'A10'.

Preferably the composition is as disclosed in A0 or in any one of A1 to A10 or as in any combination derived from the disclosure in this section and the entire specification including the claims, wherein each one of the polylysines-X independently has an amine number (AN) determined by the Titration Method as disclosed in the specification, of at least 50 and at most 2000, preferably at least 50 and at most 1500, more preferably at least 50 and at most 1200, for example at least 50 and at most 1000, for example at least 50 and at most 900, for example at least 50 and at most 800, for example at least 150 and at most 600, for example at least 200 and at most 500, for example at least 200 and at most 450, for example at least 200 and at most 400, for example at least 250 and at most 400 mg KOH/g and wherein the AN is higher than the acid value (AV) determined by the Titration Method as disclosed in the specification. The subject matter of this paragraph is mentioned in the specification as 'A11'.

Preferably the composition is as disclosed in A0 or in any one of A1 to A11 or as in any combination derived from the disclosure in this section and the entire specification including the claims, wherein each one of the polylysines-X independently has an apparent viscosity determined by the Rheometry Method as disclosed in the specification, of at least 400 and at most 8000, preferably at least 400 and at most 6000, more preferably at least 400 and at most 4000, even more preferably at least 400 and at most 2500, most preferably at least 400 and at most 2000, for example at least 400 and at most 1800, for example at least 400 and at most 1550, for example at least 450 and at most 8000, for example at least 450

and at most 6000, for example at least 450 and at most 4000, for example at least 450 and at most 2000, for example at least 450 and at most 1800, for example at least 450 and at most 1550 mPa.s, and wherein the AN is higher than the acid value (AV) determined by the Titration Method as disclosed in the specification. The subject matter of this paragraph is mentioned in the specification as 'A12'.

Preferably the composition is as disclosed in A0 or in any one of A1 to A12 or as in any combination derived from the disclosure in this section and the entire specification including the claims, wherein each one of the polylysines-X independently has:

- a number average molecular weight (abbreviated as $M_n$) determined by the Gel-Permeation Chromatography Method-1 as disclosed in the specification, of at least 1100 and at most 10000 Da, preferably at least 1500 and at most 8000 Da, more preferably at least 2000 at most 6000 Da,
- a weight average molecular weight (abbreviated as $M_w$) determined by the Gel-Permeation Chromatography Method-1 as disclosed in the specification, of at least 3000 and at most 50000 Da, preferably at least 5000 and at most 40000 Da, more preferably at least 5000 and at most 30000 Da, for example at least 10000 and at most 30000 Da,
- apparent viscosity determined by the Rheometry Method, of at least 400 and at most 8000, preferably at least 400 and at most 6000, more preferably at least 400 and at most 4000, even more preferably at least 400 and at most 2500, most preferably at least 400 and at most 2000, for example at least 400 and at most 1800, for example at least 400 and at most 1550, for example at least 450 and at most 8000, for example at least 450 and at most 6000, for example at least 450 and at most 4000, for example at least 450 and at most 2000, for example at least 450 and at most 1800, for example at least 450 and at most 1550 mPa.s.

The subject matter of this paragraph is mentioned in the specification as 'A13'.

Preferably the composition is as disclosed in A0 or in any one of A1 to A13 or as in any combination derived from the disclosure in this section and the entire specification including the claims, wherein each one of the polylysines-X has:

- a number average molecular weight (abbreviated as $M_n$) determined by the Gel-Permeation Chromatography Method-1 as disclosed in the specification, of at least 1100 and at most 10000 Da, preferably at least 1500 and at most 8000 Da, more preferably at least 2000 at most 6000 Da,
- a weight average molecular weight (abbreviated as $M_w$) determined by the Gel-Permeation Chromatography Method-1 as disclosed in the specification, of at least 3000 and at most 50000 Da, preferably at least 5000 and at most 40000 Da, more preferably at least 10000 and at most 30000 Da,
- a polydispersity (abbreviated as PD) calculated as the ratio of $M_w/M_n$, of at least 2 and at most 15, preferably at least 2 and at most 10, more preferably at least 3 and at most 8,
- an apparent viscosity determined by the Rheometry Method as disclosed in the specification, of at least 400 and at most 8000, preferably at least 400 and at most 6000, more preferably at least 400 and at most 4000, even more preferably at least 400 and at most 2500, most preferably at least 400 and at most 2000, for example at least 400 and at most 1800, for example at least 400 and at most 1550, for example at least 450 and at most 8000, for example at least 450 and at most 6000, for example at least 450 and at most 4000, for example at least 450 and at most 2000, for example at least 450 and at most 1800, for example at least 450 and at most 1550 mPa.s,
- an amine number (abbreviated as AN) determined by the Titration Method as disclosed in the specification, of at least 200 and at most 700 mg KOH/g, preferably at least 250 and at most 600 mg KOH/g, more preferably at least 250 and at most 500 mg KOH/g, especially at least 300 and at most 400 mg KOH/g.

The subject matter of this paragraph is mentioned in the specification as 'A14'.

Preferably the composition is as disclosed in A0 or in any one of A1 to A14 or as in any combination derived from the disclosure in this section and the entire specification including the claims, wherein each one of the polylysines-X has:

- a number average molecular weight (abbreviated as $M_n$) weight determined by the Gel-Permeation Chromatography Method-1 as disclosed in the specification, of at least 1100 and at most 10000 Da, preferably at least 1500 and at most 8000 Da, more preferably at least 2000 at most 6000 Da,
- a weight average molecular weight (abbreviated as $M_w$) determined by the Gel-Permeation Chromatography Method-1 as disclosed in the specification, of at least 3000 and at most 50000 Da, preferably at least 5000 and at most 40000 Da, more preferably at least 10000 and at most 30000 Da,
- a polydispersity calculated as the ratio of $M_w/M_n$, of at least 2 and at most 15, preferably at least 2 and at most 10, more preferably at least 3 and at most 8,
- an apparent viscosity determined by the Rheometry Method as disclosed in the specification of at least 400 and at most 8000, preferably at least 400 and at most 6000, more preferably at least 400 and at most 4000, even more

preferably at least 400 and at most 2500, most preferably at least 400 and at most 2000, for example at least 400 and at most 1800, for example at least 400 and at most 1550, for example at least 450 and at most 8000, for example at least 450 and at most 6000, for example at least 450 and at most 4000, for example at least 450 and at most 2000, for example at least 450 and at most 1800, for example at least 450 and at most 1550 mPa.s,

- an amine number determined by the Titration Method as disclosed in the specification, of at least 200 and at most 700 mg KOH/g, preferably at least 250 and at most 600 mg KOH/g, more preferably at least 250 and at most 500 mg KOH/g, especially at least 300 and at most 400 mg KOH/g,
- an acid value determined by the Titration Method as disclosed in the specification, of at least 10 and at most 150 mg KOH/g, preferably at least 30 and at most 100, more preferably at least 40 and at most 90 mg KOH/g, and
- a gel content of at most 3.0, preferably at most 2.0, more preferably at most 1.0, even more preferably at most 0.5, most preferably at most 0.1, especially at most 0.05, more especially a gel content of 0.0 %.

The subject matter of this paragraph is mentioned in the specification as 'A15'.

Preferably the composition is as disclosed in A0 or in any one of A1 to A15 or as in any combination derived from the disclosure in this section and the entire specification including the claims, wherein the polylysine component is present in an amount of at least 3.0 and at most 18, for example at least 3.0 and at most 15, for examples at least 3.0 and at most 14, for example at least 3.0 and at most 13, for example at least 3.0 and at most 12, for example at least 3.0 and at most 11, for example at least 3.0 and at most 10, for example at least 4.0 and at most 20, for example at least 4.0 and at most 18, for example at least 4.0 and at most 15, for examples at least 4.0 and at most 14, for example at least 4.0 and at most 13, for example at least 4.0 and at most 12, for example at least 4.0 and at most 11, for example at least 4.0 and at most 10, for example at least 4.8 and at most 20, for example at least 4.8 and at most 18, for example at least 4.8 and at most 15, for examples at least 4.8 and at most 14, for example at least 4.8 and at most 13, for example at least 4.8 and at most 12, for example at least 4.8 and at most 11, for example at least 4.8 and at most 10, for example at least 5.2 and at most 20, for example at least 5.2 and at most 18, for example at least 5.2 and at most 15, for examples at least 5.2 and at most 14, for example at least 5.2 and at most 13, for example at least 5.2 and at most 12, for example at least 5.2 and at most 11, for example at least 5.2 and at most 10 wt% of the composition. The subject matter of this paragraph is mentioned in the specification as 'A16'.

Preferably the composition is as disclosed in A0 or in any one of A1 to A16 or as in any combination derived from the disclosure in this section and the entire specification including the claims, wherein each one of the members of the XL-component has a number average molecular weight determined by the Gel-Permeation Chromatography Method-2 as disclosed in the specification, of at least 100 and at most 10000, for example at least 100 and at most 5000, for example at least 100 at most 4000, for example at least 100 and at most 3000, for example at least 100 and at most 2500, for example at least 100 and at most 2000, for example at least 150 and at most 5000, for example at least 150 at most 4000, for example at least 150 and at most 3000, for example at least 150 and at most 2500, for example at least 150 and at most 2000, for example at least 300 and at most 10000, for example at least 400 and at most 10000, for example at least 500 and at most 10000 Da. The subject matter of this paragraph is mentioned in the specification as 'A17'.

Preferably the composition is as disclosed in A0 or in any one of A1 to A16 or as in any combination derived from the disclosure in this section and the entire specification including the claims, wherein each one of the monomeric compounds of the XL-component has a number average molecular weight determined by the Gel-Permeation Chromatography Method-2 as disclosed in the specification, of at least 100 and at most 5000, for example at least 100 at most 4000, for example at least 100 and at most 3000, for example at least 100 and at most 2500, for example at least 100 and at most 2000, for example at least 150 and at most 5000, for example at least 150 at most 4000, for example at least 150 and at most 3000, for example at least 150 and at most 2500, for example at least 150 and at most 2000 Da. The subject matter of this paragraph is mentioned in the specification as 'A18'.

Preferably the composition is as disclosed in A0 or in any one of A1 to A16 and A18 or as in any combination derived from the disclosure in this section and the entire specification including the claims, wherein each one of the polymeric compounds of the XL-component has a number average molecular weight determined by the Gel-Permeation Chromatography Method-2 as disclosed in the specification, of at least 300 and at most 20000, for example at least 300 at most 15000, for example at least 300 and at most 10000, for example at least 300 and at most 8000, for example at least 300 and at most 6000, for example at least 300 and at most 5000, for example at least 300 at most 4000, for example at least 300 and at most 3000, for example at least 300 and at most 2500, for example at least 300 and at most 2000, for example at least 500 and at most 20000, for example at least 500 at most 15000, for example at least 500 and at most 10000, for example at least 500 and at most 8000, for example at least 500 and at most 6000, for example at least 500 and at most 5000, for example at least 500 at most 4000, for example at least 500 and at most 3000, for example at least 500 and at most 2500, for example at least 500 and at most 2000, for example at least 750 and at most 20000, for example at least 750 at most 15000, for example at least 750 and at most 10000, for example at least 750 and at most 8000, for example at least 750 and at most 6000, for example at least 750 and at most 5000, for example at least 750 at most 4000, for example at least 750 and at most 3000, for example at least 750 and at most 2500, for example at least 750 and at most

2000, for example at least 1000 and at most 20000, for example at least 1000 at most 15000, for example at least 1000 and at most 10000, for example at least 1000 and at most 8000, for example at least 1000 and at most 6000, for example at least 1000 and at most 5000, for example at least 1000 at most 4000, for example at least 1000 and at most 3000, for example at least 1000 and at most 2500, for example at least 1000 and at most 2000 Da. The subject matter of this paragraph is mentioned in the specification as 'A19'.

Preferably the composition is as disclosed in A0 or in any one of A1 to A19 or as in any combination derived from the disclosure in this section and the entire specification including the claims, wherein each one of the polymeric compounds of the XL-component is a linear polymeric compound, preferably each one of the polymeric compounds of the XL-component is a linear non-branched polymeric compound. The subject matter of this paragraph is mentioned in the specification as 'A20'.

Preferably the composition is as disclosed in A0 or in any one of A1 to A20 or as in any combination derived from the disclosure in this section and the entire specification including the claims, wherein none of the monomeric compounds of the XL-component and none of the polymeric compounds of the XL-component contains Si atoms in its structure. The subject matter of this paragraph is mentioned in the specification as 'A21'.

Preferably the composition is as disclosed in A0 or in any one of A1 to A21 or as in any combination derived from the disclosure in this section and the entire specification including the claims, wherein the composition may optionally comprise water. The subject matter of this paragraph is mentioned in the specification as 'A22'.

Preferably the composition is as disclosed in A0 or in any one of A1 to A22 or as in any combination derived from the disclosure in this section and the entire specification including the claims, wherein the composition comprises water in an amount determined by the Water-Content Method as disclosed in the specification, of at least 1 and at most 90, preferably at least 2 and at most 90, more preferably at least 3 and at most 90, even more preferably at least 5 and at most 90, for example at least 1 and at most 80, for example at least 2 and at most 80, for example at least 3 and at most 80, for example at least 5 and at most 80, for example at least 1 and at most 70, for example at least 2 and at most 70, for example at least 3 and at most 70, for example at least 5 and at most 70, for example at least 1 and at most 60, for example at least 2 and at most 60, for example at least 3 and at most 60, for example at least 5 and at most 60, for example at least 1 and at most 50, for example at least 2 and at most 50, for example at least 3 and at most 50, for example at least 5 and at most 50, for example at least 1 and at most 40, for example at least 2 and at most 40, for example at least 3 and at most 40, for example at least 5 and at most 40, for example at least 1 and at most 30, for example at least 2 and at most 30, for example at least 3 and at most 30, for example at least 5 and at most 30, for example at least 1 and at most 20, for example at least 2 and at most 20, for example at least 3 and at most 20, for example at least 5 and at most 20, for example at least 1 and at most 15, for example at least 2 and at most 15, for example at least 3 and at most 15, for example at least 5 and at most 15, for example at least 1 and at most 10, for example at least 2 and at most 10, for example at least 3 and at most 10, for example at least 5 and at most 10 pph of the composition. The subject matter of this paragraph is mentioned in the specification as 'A23'.

Preferably the composition is as disclosed in A0 or in any one of A1 to A21 or as in any combination derived from the disclosure in this section and the entire specification including the claims, wherein the composition comprises water and the aggregate amount of the constituent-A and water in the composition is higher than 10, preferably at least 20, for example at least 30, for example at least 40, for example at least 50, for example at least 60, for example at least 70, for example at least 80, for example at least 90, for example at least 92, for example at least 95, for example at least 97 for example at least 98, for example at least 99 pph of the composition, for example the composition consists of the constituent-A and water, wherein the amount of water is determined by the Water-Content Method disclosed in the specification. The subject matter of this paragraph is mentioned in the specification as 'A24'.

Preferably the composition is as disclosed in A0 or in any one of A1 to A21 or as in any combination derived from the disclosure in this section and the entire specification including the claims, wherein the constituent-A is present in an amount of at least 85 and at most 100, for example at least 87 and at most 100, for example at least 90 and at most 100, for example at least 92 and at most 100, for example at least 95 and at most 100, for example at least 97 and at most 100, for example at least 98 for example at least 99 and at most 100 wt% of the composition. The subject matter of this paragraph is mentioned in the specification as 'A25'.

Preferably the composition is as disclosed in A0 or in any one of A1 to A25 or as in any combination derived from the disclosure in this section and the entire specification including the claims, wherein the composition comprises an organic solvent in an amount of at most 50, preferably at most 40, more preferably at most 30, even more preferably at most 20, most preferably at most 10, especially at most 5, more especially at most 3 pph of the composition. The subject matter of this paragraph is mentioned in the specification as 'A26'.

Preferably the composition is as disclosed in A0 or in any one of A1 to A25 or as in any combination derived from the disclosure in this section and the entire specification including the claims, wherein the composition is free of organic solvent. The subject matter of this paragraph is mentioned in the specification as 'A27'

Preferably the composition is as disclosed in A0 or in any one of A1 to A27 or as in any combination derived from the disclosure in this section and the entire specification including the claims, wherein the composition consists of constituent-A and water. The subject matter of this paragraph is mentioned in the specification as 'A28'.

Preferably the composition is as disclosed in in A0 or in any one of A1 to A28 or as in any combination derived from the disclosure in this section and the entire specification including the claims, wherein the composition may optionally comprise a constituent-B which is selected from the group consisting of proteins and mixtures thereof. More preferably, the composition may optionally comprise the constituent-B in an amount of at most 0.95, preferably at most 0.90, more preferably at most 0.80, for example at most 0.70, for example at most 0.60, for example at most 0.50 for example at most 0.40 for example at most 0.30 for example at most 0.20 for example at most 0.10 for example at most 0.05 pph of the composition. The subject matter of this paragraph is mentioned in the specification as 'A29'.

Preferably the composition is as disclosed in A0 or in any one of A1 to A28 or as in any combination derived from the disclosure in this section and the entire specification including the claims, wherein the composition is free of constituent-B and the constituent-B is different and distinct from any other component and constituent of the composition. The subject matter of this paragraph is mentioned in the specification as 'A30'.

Preferably the composition is as disclosed in A0 or in any one of A1 to A30 or as in any combination derived from the disclosure in this section and the entire specification including the claims, wherein the composition may optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a tannin, a lignosulfonate salt or a mixture thereof, and wherein the composition is free of any polyphenolic macromolecular compound other than a tannin, a lignosulfonate salt and any mixture of any combination of a tannin, and lignosulfonate salt. More preferably the composition is as disclosed in A0 or in any one of A1 to A30 or as in any combination derived from the disclosure in this section and the entire specification including the claims, wherein the composition may optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a condensed tannin, a lignosulfonate salt or a mixture thereof, and wherein the composition is free of any polyphenolic macromolecular compound other than a condensed tannin, a lignosulfonate salt and any mixture of any combination of a condensed tannin, and lignosulfonate salt. Even more preferably the composition is as disclosed in A0 or in any one of A1 to A30 or as in any combination derived from the disclosure in this section and the entire specification including the claims, wherein the composition may optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a lignosulfonate salt or a mixture of lignosulfonate salts, and wherein the composition is free of any polyphenolic macromolecular compound other than a lignosulfonate salt and mixtures of lignosulfonate salts. Most preferably the composition is as disclosed in A0 or in any one of A1 to A30 or as in any combination derived from the disclosure in this section and the entire specification including the claims, wherein the composition may optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is calcium lignosulfonate, ammonium lignosulfonate, magnesium lignosulfonate or a mixture thereof, and wherein the composition is free of any polyphenolic macromolecular compound other than calcium lignosulfonate, ammonium lignosulfonate, magnesium lignosulfonate and a mixture thereof. Especially, the composition is as disclosed in A0 or in any one of A1 to A30 or as in any combination derived from the disclosure in this section and the entire specification including the claims, wherein the composition may optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most

0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is magnesium lignosulfonate, and wherein the composition is free of any polyphenolic macromolecular compound other than magnesium lignosulfonate. The subject matter of this paragraph is mentioned in the specification as 'A31'.

Preferably the composition is as disclosed in claim 1 in A0 or in any one of A1 to A30 or as in any combination derived from the disclosure in this section and the entire specification including the claims, wherein the composition is free of constituent-C and wherein the constituent-C is different and distinct from any other component and constituent of the composition. The subject matter of this paragraph is mentioned in the specification as 'A32'.

Preferably the composition is as disclosed in claim 1 or in A0 or in any one of A1 to A32 or as in any combination derived from the disclosure in this section and the entire specification including the claims, wherein the composition may optionally comprise a constituent-D which constituted-D is selected from the group consisting of: i) monosaccharides in their aldose or ketose form, ii) oligosaccharides, iii) polysaccharides, iv) monomeric or polymeric compounds that yield one or more reducing sugars in situ e.g. upon heating, and mixtures of i) to iv), and the constituent-D is different and distinct from any other component and constituent of the composition. The subject matter of this paragraph is mentioned in the specification as 'A33'.

Preferably the composition is as disclosed in A0 or in any one of A1 to A32 or as in any combination derived from the disclosure in this section and the entire specification including the claims, wherein the composition is free of constituent-D and wherein the constituent-D is different and distinct from any other component and constituent of the composition. The subject matter of this paragraph is mentioned in the specification as 'A34'.

Preferably the composition is as disclosed in A0 or in any one of A1 to A34 or as in any combination derived from the disclosure in this section and the entire specification including the claims, wherein the composition may optionally comprise a constituent-E which constituent-E is selected from the group consisting of peptides and mixtures thereof, and wherein the constituent-E is different and distinct from any other component and constituent of the composition, in an amount of at most 0.30 for example at most 0.20 for example at most 0.10 for example at most 0.05 wt% of the composition. The subject matter of this paragraph is mentioned in the specification as 'A35'.

Preferably the composition is as disclosed in A0 or in any one of A1 to A34 or as in any combination derived from the disclosure in this section and the entire specification including the claims, wherein the composition is free of constituent-E and wherein the constituent-E is different and distinct from any other component and constituent of the composition. The subject matter of this paragraph is mentioned in the specification as 'A36'.

Preferably the composition is as disclosed in A0 or in any one of A1 to A36 or as in any combination derived from the disclosure in this section and the entire specification including the claims, wherein the composition may optionally comprise a constituent-G which is selected from the group consisting of polymers containing acetoacetoxy groups [e.g. acetoacetylated poly(vinylalcohol)], and mixtures thereof, and wherein the constituent-G is different and distinct from any other component and constituent of the composition. Preferably, the composition may optionally comprise the constituent-G in an amount of at most 10, preferably at most 9, for example at most 8, for example at most 8, for example at most 7, for example at most 6, for example at most 5, for example at most 4, for example at most 3, for example at most 2, for example at most 1.50, for example at most 1.40, for example at most 1.30 for example at most 1.20 for example at most 1.10 for example at most 1.0 for example at most 0.90, for example at most 0.80, for example at most 0.70, for example at most 0.60 for example at most 0.50 for example at most 0.40 for example at most 0.30, for example at most 0.20, for example at most 0.10, for example at most 0.09, for example at most 0.08, for example at most 0.07, for example at most 0.06, for example at most 0.05, for example at most 0.04 for example at most 0.03 for example at most 0.02 for example at most 0.01 for example at most 0.005 pph of the composition, for example the composition is free of constituent-G and wherein the constituent-G is different and distinct from any other component and constituent of the composition. The subject matter of this paragraph is mentioned in the specification as 'A37'.

Preferably the composition is as disclosed in A0 or in any one of A1 to A36, wherein the composition is free of constituent-G and wherein the constituent-G is different and distinct from any other component and constituent of the composition. The subject matter of this paragraph is mentioned in the specification as 'A38'.

Preferably the composition is as disclosed in A0 or in any one of A1 to A38, wherein the compositions may optionally comprise a constituent-H which is selected from the group consisting of monomeric compounds containing acetoacetoxy groups, and mixtures thereof, and wherein the constituent-H is different and distinct from any other component and constituent of the composition. Preferably the compositions may optionally the constituent-H in an amount of at most 10, preferably at most 9, for example at most 8, for example at most 8, for example at most 7, for example at most 6, for example at most 5, for example at most 4, for example at most 3, for example at most 2, for example at most 1.50, for example at most 1.40, for example at most 1.30 for example at most 1.20 for example at most 1.10 for example at most 1.0 for example at most 0.90, for example at most 0.80, for example at most 0.70, for example at most 0.60 for example at most 0.50 for example at most 0.40 for example at most 0.30, for example at most 0.20, for example at most 0.10, for example at most 0.09, for example at most 0.08, for example at most 0.07, for example at most 0.06, for example at

most 0.05, for example at most 0.04 for example at most 0.03 for example at most 0.02 for example at most 0.01 for example at most 0.005 pph of the composition, wherein the constituent-H is different and distinct from any other component and constituent of the composition. The subject matter of this paragraph is mentioned in the specification as 'A39'.

Preferably the composition is as disclosed in A0 or in any one of A1 to A38, wherein the composition is free of constituent-H and wherein the constituent-H is different and distinct from any other component and constituent of the composition. The subject matter of this paragraph is mentioned in the specification as 'A40'.

Preferably the composition is as disclosed in A0 or in any one of A1 to A40 or as in any combination derived from the disclosure in this section and the entire specification including the claims, wherein the composition is free of urea-formaldehyde resins. The subject matter of this paragraph is mentioned in the specification as 'A41'.

Preferably the composition is as disclosed in A0 or in any one of A1 to A41 or as in any combination derived from the disclosure in this section and the entire specification including the claims, wherein the composition is free of melamine-formaldehyde resins. The subject matter of this paragraph is mentioned in the specification as 'A42'.

Preferably the composition is as disclosed in A0 or in any one of A1 to A42 or as in any combination derived from the disclosure in this section and the entire specification including the claims, wherein the composition is free of isocyanates and polyisocyanates. The subject matter of this paragraph is mentioned in the specification as 'A43'.

Preferably the composition is as disclosed in A0 or in any one of A1 to A43 or as in any combination derived from the disclosure in this section and the entire specification including the claims, wherein the composition is free of urea-formaldehyde resins, and free of melamine-formaldehyde resins, and free of isocyanates, and free of polyisocyanates, and free of mixtures thereof. The subject matter of this paragraph is mentioned in the specification as 'A44'.

The fibrous component consists of at least one fibrous element which fibrous element comprises vegetable fibers, and wherein the fibrous element is free of any fibers other than the vegetable fibers, and wherein the composition is free of any fibers other than the vegetable fibers of the fibrous component. Thus, both the fibrous component and the inventive compositions comprise only vegetable fibers.

Preferably the composition is as disclosed in A0 or in any one of A1 to A44 or as in any combination derived from the disclosure in this section and the entire specification including the claims, wherein the fibrous component is present in an amount of at least 10 and at most 98, preferably at least 20 and at most 98, more preferably at least 30 and at most 98, most preferably at least 40 and at most 98, especially at least 50 and at most 98, more especially at least 60 and at most 98, even more especially at least 70 and at most 98, most especially at least 80 and at most 98, for example at least 85 and at most 98 wt% of the composition. The subject matter of this paragraph is mentioned in the specification as 'A45'.

Preferably the composition is as disclosed in A0 or in any one of A1 to A45 or as in any combination derived from the disclosure in this section and the entire specification including the claims, wherein the fibrous element comprises vegetable fibers in an amount of at least 20, preferably at least 30, more preferably at least 40, for example at least 50, for example at least 60, for example at least 70, for example at least 80, for example at least 90, for example at least 95, for example at least 96, for example at least 97, for example at least 98, for example at least 99, for example at least 99.5 wt% of the fibrous element, for example the fibrous element consists of vegetable fibers. The subject matter of this paragraph is mentioned in the specification as 'A46'.

Preferably the composition is as disclosed in A0 or in any one of A1 to A46 or as in any combination derived from the disclosure in this section and the entire specification including the claims, wherein the vegetable fibers are selected from the group consisting of natural cellulose fibers, natural lignocellulosic fibers, and mixtures thereof. The subject matter of this paragraph is mentioned in the specification as 'A47'.

Preferably the composition is as disclosed in A0 or in any one of A1 to A47 or as in any combination derived from the disclosure in this section and the entire specification including the claims, wherein the vegetable fibers are selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf fibers, straw fibers, grass fibers, leaf fibers, and mixtures thereof. The subject matter of this paragraph is mentioned in the specification as 'A48'.

Preferably the composition is as disclosed in A0 or in any one of A1 to A48 or as in any combination derived from the disclosure in this section and the entire specification including the claims, wherein the vegetable fibers are selected from the group consisting of wood fibers, reed fibers, and mixtures thereof. The subject matter of this paragraph is mentioned in the specification as 'A49'.

Preferably the composition is as disclosed in A0 or in any one of A1 to A49 or as in any combination derived from the disclosure in this section and the entire specification including the claims, wherein the vegetable fibers are wood fibers. The subject matter of this paragraph is mentioned in the specification as 'A50'.

Preferably the composition is as disclosed in A0 or in any one of A1 to A50 or as in any combination derived from the disclosure in this section and the entire specification including the claims, wherein the fibrous element is selected from the group consisting of fibers, filaments, yarns, strips, strands, threads, staple fiber yarns, particles, chips, shavings, flakes, lamellae, pulp, and mixtures thereof; preferably the fibrous element is selected from the group consisting of fibers,

filaments, yarns, threads, staple fiber yarns, particles, chips, shavings, flakes, pulp, and mixtures thereof; more preferably the fibrous element is a wood chip. The subject matter of this paragraph is mentioned in the specification as 'A51'.

Preferably the composition is as disclosed in A0 or in any one of A1 to A51 or as in any combination derived from the disclosure in this section and the entire specification including the claims, wherein the fibrous component consists of wood chips wherein the d50 which is the median value of the particle size distribution of the wood chips determined according to the ISO 17827-1:2016, is at least 1 and at most 50, preferably at least 1 and at most 40, for example at least 1 and most 30, for example at least 1 and at most 20, for example at least 1 and at most 15, for example at least 1 and at most 10, for example at least 1 and at most 8 mm. The subject matter of this paragraph is mentioned in the specification as 'A52'.

In an embodiment of the invention, there is provided a process for obtaining an object wherein the process comprises the steps a to c:

a) providing a composition as disclosed in A0 or in any one of A1 to A52 or as in any combination derived from the disclosure in this section and the entire specification including the claims; and
b) subjecting the composition to heat and/or pressure and/or vacuum, preferably simultaneous heat and pressure, to form an object, and
c) collecting the object.

The subject matter of this paragraph is mentioned in the specification as 'A53'.

Preferably the process for obtaining an object is as disclosed in A53 or as in any combination derived from the disclosure in this section and the entire specification including the claims, wherein the step b is as follows:
b) subjecting the composition to heat -preferably at any temperature in the range of from and including 40 up to and including 300 °C, for example in the range of from and including 100 up to and including 300 °C, for example in the range of from and including 100 up to and including 280 °C, for example in the range of from and including 100 up to and including 260 °C, for example in the range of from and including 100 up to and including 250 °C, for example in the range of from and including 100 up to and including 240 °C, for example in the range of from and including 100 up to and including 230 °C for example in the range of from and including 100 up to and including 220 °C for example in the range of from and including 100 up to and including 210 °C, for example in the range of from and including 110 up to and including 300 °C, for example in the range of from and including 110 up to and including 280 °C, for example in the range of from and including 110 up to and including 260 °C, for example in the range of from and including 110 up to and including 250 °C, for example in the range of from and including 110 up to and including 240 °C, for example in the range of from and including 110 up to and including 230 °C, for example in the range of from and including 110 up to and including 220 °C, for example in the range of from and including 110 up to and including 210 °C, for example in the range of from and including 120 up to and including 300 °C, for example in the range of from and including 120 up to and including 280 °C, for example in the range of from and including 120 up to and including 260 °C, for example in the range of from and including 120 up to and including 250 °C, for example in the range of from and including 120 up to and including 240 °C, for example in the range of from and including 120 up to and including 230 °C, for example in the range of from and including 120 up to and including 220 °C, for example in the range of from and including 120 up to and including 210 °C, for example in the range of from and including 130 up to and including 300 °C, for example in the range of from and including 130 up to and including 280 °C, for example in the range of from and including 130 up to and including 260 °C, for example in the range of from and including 130 up to and including 250 °C, for example in the range of from and including 130 up to and including 240 °C, for example in the range of from and including 130 up to and including 230 °C, for example in the range of from and including 130 up to and including 220 °C, for example in the range of from and including 130 up to and including 210 °C, for example in the range of from and including 140 up to and including 300 °C, for example in the range of from and including 140 up to and including 280 °C, for example in the range of from and including 140 up to and including 260 °C, for example in the range of from and including 140 up to and including 250 °C, for example in the range of from and including 140 up to and including 240 °C, for example in the range of from and including 140 up to and including 230 °C for example in the range of from and including 140 up to and including 220 °C for example in the range of from and including 140 up to and including 210 °C, for example in the range of from and including 150 up to and including 300 °C, for example in the range of from and including 150 up to and including 280 °C, for example in the range of from and including 150 up to and including 260 °C, for example in the range of from and including 150 up to and including 250 °C, for example in the range of from and including 150 up to and including 240 °C, for example in the range of from and including 150 up to and including 230 °C, for example in the range of from and including 150 up to and including 220 °C, for example in the range of from and including 150 up to and including 210 °C, for example in the range of from and including 160 up to and including 300 °C, for example in the range of from and including 160 up to and including 280 °C, for example in the range of from and including 160 up to and including 260 °C, for example in the range of from and including 160 up to and including 250 °C, for example in the range of from and including 160 up to and including 240 °C, for example in the range of from and including 160 up to and including 230 °C, for example in the range of from and including 160 up to and including 220 °C, for example in the range of from and including 160 up to and including 210 °C, for example in the range of from and including 100 up to and including 160 °C, for example in the range of from and including 110 up to and including

160 °C, for example in the range of from and including 120 up to and including 160 °C, for example in the range of from and including 130 up to and including 160 °C, for example in the range of from and including 140 up to and including 160 °C, for example in the range of from and including 150 up to and including 160 °C, for example at 100 °C, for example at 110 °C, for example at 120 °C, for example at 130 °C, for example at 140 °C, for example at 150 °C, for example at 160 °C, for example at 170 °C, for example at 180 °C, for example at 190 °C, for example at 200 °C, for example at 210 °C, for example at 220 °C, for example at 240 °C, for example at 250 °C, for example at 260 °C, for example at 270 °C, for example at 280 °C, for example at 290 °C, for example at 300 °C, and/or pressure -for example at any pressure in the range of from an including 120 up to and including $10^5$ kPa- and/or vacuum -for example at any vacuum in the range of from an including $10^{-10}$ up to and including 90 kPa-, for a time enough -for example for at least 1 sec and at most 60 min, more for example at least 2 sec and at most 30 min, for example at least 3 sec and at most 20 min, for example at least 4 sec and at most 10 min, for example at least 5 sec and at most 8 min, for example at least 10 sec and at most 6 min, for example at least 10 sec and at most 5 min, for example at least 10 sec and at most 3 min, for example at least 10 sec and at most 2 min, for example at least 30 sec and at most 5 min for example at least 30 sec and at most 3 min for example at least 30 sec and at most 2 min, for example at least 60 sec and at most 5 min, for example at least 60 sec and at most 3 min for example at least 60 sec and at most 2 min- to form an object; for example subjecting the composition to simultaneous heat and pressure in any combination of temperature and pressure ranges disclosed just above for any time range disclosed just above to form an object. The subject matter of this paragraph is mentioned in the specification as 'A54'.

Preferably the process for obtaining an object is as disclosed in any one of A53 to A54 or as in any combination derived from the disclosure in this section and the entire specification including the claims, wherein the object is selected from the group consisting of sheets, tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites]. More preferably the process for obtaining an object is as disclosed in any one of A53 to A54 as in any combination derived from the disclosure in this section and the entire specification including the claims, wherein the object is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites. Even more preferably the process for obtaining an object is as disclosed in any one of A53 to A54 or as in any combination derived from the disclosure in this section and the entire specification including the claims, wherein the object is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB); Most preferably the process for obtaining an object is as disclosed in any one of A53 to A54 or as in any combination derived from the disclosure in this section and the entire specification including the claims, wherein the object is selected from the group consisting of fibreboard [the term includes low-density fibreboard (LDF; known also as particle board or chip board), medium-density fibreboard (MDF), and high-density fibreboard (HDF; known also as waferboard, flakeboard)], oriented strand board (OSB). Especially the process for obtaining an object is as disclosed in any one of A53 to A54 or as in any combination derived from the disclosure in this section and the entire specification including the claims, wherein the object is selected from the group consisting of a fiberboard [the term includes low-density fibreboard (LDF; known also as particle board or chip board), medium-density fibreboard (MDF), and high-density fibreboard (HDF; known also as waferboard, flakeboard)]. For example the process for obtaining an object is as disclosed in any one of A53 to A54 or as in any combination derived from the disclosure in this section and the entire specification including the claims, wherein the object is a low-density fibreboard (LDF; known also as particle board or chip board. For example the process for obtaining an object is as disclosed in any one of A53 to A54 or as in any combination derived from the disclosure in this section and the entire specification including the claims, wherein the object is a medium-density fibreboard (MDF). For example the process for obtaining an object is as disclosed in any one of A53 to A54 or as in any combination derived from the disclosure in this section and the entire specification including the claims, wherein the object is a high-density fibreboard (HDF; known also as waferboard, flakeboard)]. The subject matter of this paragraph is mentioned in the specification as 'A55'.

Preferably the process for obtaining an object is as disclosed in any one of A53 to A55 or as in any combination derived from the disclosure in this section and the entire specification including the claims, wherein the object is selected from the group consisting of sheets, tapes, sticks, strips, films, cloths, containers, boards, panels, beams, frames, planks, engineered wood. The subject matter of this paragraph is mentioned in the specification as 'A56'.

Preferably the process for obtaining an object is as disclosed in any one of A53 to A56 or as in any combination derived from the disclosure in this section and the entire specification including the claims, wherein the object is engineered wood. The subject matter of this paragraph is mentioned in the specification as 'A57'.

Preferably the process for obtaining an object is as disclosed in any one of A53 to A57 or as in any combination derived from the disclosure in this section and the entire specification including the claims, wherein the object is a fibreboard [the term includes low-density fibreboard (LDF; known also as particle board or chip board), medium-density fibreboard (MDF), and high-density fibreboard (HDF; known also as waferboard, flakeboard)]. The subject matter of this paragraph is mentioned in the specification as 'A58'.

In an embodiment of the invention, there is provided an object obtained by a process as disclosed in any one of A53 to A58 or as in any combination derived from the disclosure in this section and the entire specification including the claims. The subject matter of this paragraph is mentioned in the specification as 'A59'.

Preferably the object as disclosed in A59 or as in any combination derived from the disclosure in this section and the entire specification including the claims, is selected from the group consisting of sheets, tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites]. More preferably the object as disclosed in A59 or as in any combination derived from the disclosure in this section and the entire specification including the claims, is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites. Even more preferably the object as disclosed in A59 or as in any combination derived from the disclosure in this section and the entire specification including the claims, is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB). Most preferably the object as disclosed in A59 or as in any combination derived from the disclosure in this section and the entire specification including the claims, is selected from the group consisting of fibreboard [the term includes low-density fibreboard (LDF; known also as particle board or chip board), medium-density fibreboard (MDF), and high-density fibreboard (HDF; known also as waferboard, flakeboard)], oriented strand board (OSB). Especially the object as disclosed in A59 or as in any combination derived from the disclosure in this section and the entire specification including the claims, is a fiberboard [the term includes low-density fibreboard (LDF; known also as particle board or chip board), medium-density fibreboard (MDF), and high-density fibreboard (HDF; known also as waferboard, flakeboard)]. For example the object as disclosed in A59 or as in any combination derived from the disclosure in this section and the entire specification including the claims, is a low-density fibreboard (LDF; known also as particle board or chip board; for example the object is a medium-density fibreboard (MDF). For example the object as disclosed in A59 or as in any combination derived from the disclosure in this section and the entire specification including the claims, is a high-density fibreboard (HDF; known also as waferboard, flakeboard)]. The subject matter of this paragraph is mentioned in the specification as 'A60'.

Preferably the object as disclosed in A59 as in any combination derived from the disclosure in this section and the entire specification including the claims, wherein the object is selected from the group consisting of sheets, tapes, sticks, strips, films, cloths, containers, boards, panels, beams, frames, planks, engineered wood. The subject matter of this paragraph is mentioned in the specification as 'A61'.

Preferably the object as disclosed in A59 or as in any combination derived from the disclosure in this section and the entire specification including the claims, is engineered wood. The subject matter of this paragraph is mentioned in the specification as 'A62'.

Preferably the object as disclosed in A59 or as in any combination derived from the disclosure in this section and the entire specification including the claims, is a fibreboard. The subject matter of this paragraph is mentioned in the specification as 'A63'.

In an embodiment of the invention, there is provided an article comprising: a) a part which is solid at 23 °C and 1 atm; and one or both of b) and c), wherein b) is a composition as disclosed in A0 or in any one of A1 to A52 or as in any combination derived from the disclosure in this section and the entire specification including the claims, and c) is an object (especially engineered wood, more especially fibreboard) as disclosed in any one of A59 to A63, or as in any combination derived from the disclosure in this section and the entire specification including the claims. The subject matter of this paragraph is mentioned in the specification as 'A64'.

In an embodiment of the invention, there is provided use of any one or any combination of i) to iii):

i) a composition as disclosed in A0 or in any one of A1 to A52 or as in any combination derived from the disclosure in this section and the entire specification including the claims;
ii) an object as disclosed in any one of A59 to A63, or as in any combination derived from the disclosure in this section and the entire specification including the claims;
iii) an article according as disclosed in A64, or as in any combination derived from the disclosure in this section and the entire specification including the claims;

in absorbents, 3D-printing, automotive applications (including but not limited to car parts, agricultural machines, composite structures, ceramic structures), marine applications (including but not limited to ships, boats, parts for ships and boats), aerospace applications (including but not limited to planes, helicopters, composite structures, ceramic structures, parts for planes, helicopters), medical items (including but not limited to artificial joints, meshes, woven or non-woven sheets, tapes, ribbons, bands, cables, tube-like products for e.g. ligament replacement, composite structures, ceramic structures), defense applications (including but not limited to ballistic protection, body armor, ballistic vests, ballistic helmets, ballistic vehicle protection, composite structures, ceramic structures), sports/recreational applications (including but not limited to toys, fencing, skates, skateboarding, snowboarding, suspension lines on sport parachutes, paragliders, kites, kite lines for kite sports, climbing equipment, composite structures, ceramic structures), architectural applications (including but not limited to windows, doors, (pseudo-)walls, cable), bottling applications, household applications (including but not limited to household appliances, whitegoods, furniture, computer housings), machinery applications (including but not limited to can and bottle handling machine parts, moving parts on weaving machines, bearings, gears, composite structures, ceramic structures, computer housings), can applications, coil applications, energy related applications (including but not limited to generators for wind, tide or solar energy), and electricity related applications (including but not limited to cabinets for electrical wire or switch boards). The subject matter of this paragraph is mentioned in the specification as 'A65'.
Further preferments and embodiments of the invention and preferred features thereof are given in the claims and in the Examples.
Unless otherwise explicitly stated, any feature, element, component, embodiment, range and especially any preferred feature, preferred element, preferred embodiment, preferred range, preferred combination of ranges, preferment described in the entire specification can be combined with each other. Unless otherwise explicitly stated, any feature, element, component, embodiment, range and especially any preferred feature, preferred element, preferred embodiment, preferred range, preferred combination of ranges, preferments, and embodiments in connection with any piece of disclosure in any one of A1 to A65 disclosed in this section can be combined with each other and with any other feature, element, component, embodiment, range and especially any preferred feature, preferred element, preferred embodiment, preferred range, preferred combination of ranges, preferments, and embodiments of the invention as these are disclosed in the entire specification including the claims. All combinations of minimum and maximum values of the parameters disclosed in this section may be used to define the parameter ranges for various preferments and embodiments of the invention disclosed in this section. Unless otherwise explicitly stated, any feature, element, component, embodiment, range and especially any preferred feature, preferred element, preferred embodiment, preferred range, preferred combination of ranges, preferments, and embodiments of the invention as these are disclosed in this section, in the claims and in the entire specification can be combined with each other. For all upper and lower boundaries of any parameters given in this section, the boundary value is included in each range for each parameter. All combinations of minimum and maximum values of the parameters disclosed in this section may be used to define the parameter ranges for the various preferments and embodiments disclosed in this section.

## EXAMPLES

The invention is explained in more detail with reference to the following non-limiting examples which are by way of illustration only.
In the Examples section:

- the abbreviation 'I' (followed by an indexing number) represents examples according to the invention;
- the abbreviation 'C' (followed by an indexing number) represents examples not according to the invention;

By 'inventive examples' is meant in the specification examples which are according to the invention.
By 'comparative examples' is meant in the specification examples which are not according to the invention.
Unless otherwise specified, all the examples shown in this section were carried out in a controlled laboratory environment at standard conditions (defined in the specification), relative humidity of 50±1 %, and airflow of ≤ 0.1 m/s.

For any comparison of the internal bond strength and flexural properties between an inventive and a comparative specimen -and in addition to well-established principles of proper comparison as those are known to the skilled person in the art-, it is emphasized that:

- the comparative and inventive fibreboards are prepared according to the process disclosed in this specification (see §1.4),
- the thickness of the comparative fibreboard should be within ±10 % from the thickness of the corresponding inventive fibreboard,
- the density of the comparative fibreboard should be within ±10 % from the density of the corresponding inventive fibreboard.

### 1.1. Chemicals, raw materials and other materials used in the examples

SEWON L-Lysine® (50 wt% of L-lysine in water, Lot No. 181224) was supplied by Daesang and it was used as supplied. Epikote™ 828 [bisphenol A diglycidyl ether EEW: 175 g/eq.; reported solids content: 100 %) was supplied by Hexion B.V. Diethylene glycol (Cat. No. 32160, ≥99.0% (GC), colorless), pyruvic acid (Cat. No. 8.20170, for synthesis), levulinic acid (Cat. No. 8.14254, for synthesis), diacetoneacrylamide (Cat. No. 222348, contains ≤100 ppm inhibitor, 99%), toluene (Cat. No. 320552, ACS reagent, ≥99.5%) and methane sulphonic acid (Cat. No. 47135, ≥99.0%) were supplied by Sigma-Aldrich and used as supplied.

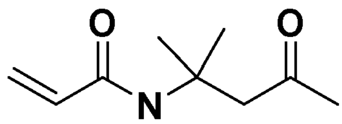

Formula of diacetoneacrylamide

Diacetoneacrylamide is not an XL-compound as disclosed in the specification because it has only one XL-group per molecule. In Table 1, diacetoneacrylamide was abbreviated as DAAM. ε-Polylysine (light yellow powder with a purity of 99.4%) was supplied by Bonding Chemical. The ε-polylysine (mentioned in Table 1 as PLL-2) had a $M_n$ of 21301 Da, a $M_w$ of 22061 Da and a polydispersity (PD) (=$M_w/M_n$) of 1.04, determined by the Gel-Permeation Chromatography Method-1 described in this specification, and an apparent viscosity determined by the Rheometry Method described in this specification, of 32480 mPa.s. The ε-polylysine is a linear polylysine and it is not according to the claimed invention. Wood chips with a water content of 2.7 wt%, density of 240 kg/$m^3$ and a d50 (median value of the particle size distribution of the wood chips; according to the ISO 17827-1:2016) of 4.5 mm, were used to prepare the fibreboards.

### 1.2. Preparation of a polylysine component

#### 1.2.1. Hyperbranched polylysine 1 (abbreviated as PLL-1)

The preparation of the hyperbranched polylysine 1 (PLL-1 ) was carried out as follows: 6254 g of SEWON L-Lysine® were added at room temperature, to a 10 litre glass reactor equipped with a distillation set up. Subsequently, the temperature in the reactor was slowly (over 4 hours) raised to 105 °C (the slow increase in temperature is essential to avoid precipitation of unreacted L-lysine in the reactor, which can occur if too much water has distilled off before sufficient reaction conversion). Once the temperature in the reactor reached 105°C, the distillation of water starts. The temperature of the reactor was slowly increased to 160 °C. At the moment that the reaction reached 130°C, 2610 g SEWON L-Lysine® was added slowly into the reactor at the same rate that water was being distilled off. Subsequently, when temperature reached 160 °C, the temperature was maintained at 160 °C for 1 hour. After 1 hour at 160°C, vacuum was applied slowly to 100 mbar for as long as the apparent viscosity determined by the Rheometry Method as disclosed in the specification, of the content of the reactor reached 1300 mPa.s. Once the apparent viscosity of 1300 mPa.s was achieved, the temperature in the reactor was then decreased to 90 °C and water was dosed into the reactor and reach a solids content of 60 ±1 wt%. The end product -the hyperbranched polylysine 1 (PLL-1)- was obtained as a brown solution in water.

Characterization of the hyperbranched polylysine 1 (PLL-1): DB: 0.43 [D = 18.2 (integral at 4.15-4.40 ppm); Lα = 9.3 (integral at 3.90- 4.10 ppm); Lε = 47.4 (integral at 3.25-3.30 ppm)], gel content: 0.0 %; $M_n$: 2250 Da, $M_w$: 10609 Da, polydispersity (PD) (=$M_w/M_n$): 4.72, amine number (AN): 386 mg KOH/g, acid value (AV): 33 mg KOH/g (three ERC peaks were recorded in the Titration Method), apparent viscosity: 1300 mPa.s.

### 1.3. Preparation of a XL-component

### 1.3.1. Preparation of XL-component 1 (abbreviated as XL-C1)

To a one liter round-bottomed flask equipped with a Dean-Stark trap, condenser, nitrogen inlet and a mechanical propellor type stirrer was diethylene glycol (283.50 g; 1.336 mol OH groups), pyruvic acid (117.62g; 1.336 mol) and toluene (600.00 g). The reactor contents were heated to 85°C with stirring and a flow of nitrogen was maintained. To the reactor was added methane sulphonic acid (1.73 g; 18.0 mmol) and the reactor contents were heated to a maximum temperature of 113°C. At a temperature of 110°C toluene started to distill and water was removed azeotropically which was collected in the Dean-Stark trap. After 5 hours no more reaction water was produced and the reactor contents were cooled to 90°C. The Dean-Stark trap was replaced by a condenser and receiving vessel. Vacuum was applied to the reactor and toluene was removed by distillation under reduced pressure. Epikote™ 828 (6.29 g; 18.0 mmol) was added to neutralize the methane sulphonic acid. The reactor contents were cooled and discharged to yield a clear pale yellow liquid ($M_n$: 246.2 Da). The XL-C1 is a monomeric compound having two XL2-groups.

### 1.3.2. Preparation of XL-component 2 (abbreviated as XL-C2)

To a one liter round-bottomed flask equipped with a Dean-Stark trap, condenser, nitrogen inlet and a mechanical propellor type stirrer was diethylene glycol (283.50 g; 1.336 mol OH groups), levullinic acid (155.09 2g; 1.336 mol) and toluene (600.00 g). The reactor contents were heated to 85°C with stirring and a flow of nitrogen was maintained. To the reactor was added methane sulphonic acid (1.73 g; 18.0 mmol) and the reactor contents were heated to a maximum temperature of 113°C. At a temperature of 110°C toluene started to distill and water was removed azeotropically which was collected in the Dean-Stark trap. After 5 hours no more reaction water was produced and the reactor contents were cooled to 90°C. The Dean-Stark trap was replaced by a condenser and receiving vessel. Vacuum was applied to the reactor and toluene was removed by distillation under reduced pressure. Epikote™ 828 (6.29 g; 18.0 mmol) was added to neutralize the methane sulphonic acid. The reactor contents were cooled and discharged to yield a clear pale yellow liquid ($M_n$: 302.3 Da). The XL-C2 is a monomeric compound having two XL1a-groups.

### 1.4. Preparation of the comparative and inventive fibreboards

The comparative and inventive compositions shown in Table 1 were prepared by initially hand-mixing the polylysine component and the XL-component in a container for 60 sec. The fibrous component was placed into a planetary mixer without affecting any mixing at this time. Subsequently, the mixture of the polylysine component and the XL-component was added over a period of 60 sec to the planetary mixer which contained the fibrous component under mixing. Once the addition of the mixture of the polylysine component and the XL-component was completed, then the mixing continued for another 3 min.

The comparative and inventive objects i.e. fibreboards, were prepared by subjecting their corresponding compositions to simultaneous heating (160 °C) and pressure [50 $kg/cm^2$= 4903.325 kPa)] (hot-pressed) in a way to achieve a press time factor of 9 sec/mm, using a suitable hot-press (e.g. Fontijne TP800) to form boards of 28 (L) x 34 (W) x 1.2 (T) cm (surface of 425 $cm^2$).

The thickness of all the fibreboards prepared and tested was 12 mm $\pm$ 10 %.

The density of all the fibreboards prepared and tested was 750 $kg/m^3$ $\pm$ 10 %.

The weight amounts of the polylysine component shown in Table 1 were calculated on the basis of the solids content determined by the Solids-content Method as disclosed in the specification, of the polylysine component; thus the reported weight amounts of the polylysine component shown in Table 1 correspond to solids content 100 % of the polylysine component.

The weight amounts of the XL-component shown in Table 1 were calculated on the basis of the solids content as the latter is reported in the corresponding paragraphs in this section of the specification; thus the reported weight amounts of the XL-component shown in Table 1 correspond to solids content 100 % of the XL-component.

### 1.5. Determination of the $M_n$, $M_w$

### 1.5.1. Determination of the $M_n$, $M_w$ of the polylysines-X ('Gel-Permeation Chromatography Method-1')

The number average molecular weight ($M_n$) and the weight average molecular weight ($M_w$) of a member of the polylysines-X were determined via Gel Permeation Chromatography (GPC) calibrated with a set of lysozyme from chicken egg white (CAS 12650-88-3; product number L6876; lyophilized powder, protein $\geq$ 90 %, $\geq$ 40000 units/mg protein; molecular weight single chain 14.3 kDa) and bovine serum albumin (CAS 9048-46-8; product number A2153; lyophilized powder, $\geq$96 %, molecular weight 66 kDa) standards both supplied by Sigma-Aldrich and using as eluent a solution of 500 mM NaCl and 0.0425 wt% $H_3PO_4$ in MilliQ water (the solution having a pH of 2.2) at a flow rate of 0.8 mL/min at 40 °C. 75 mg

of sample dissolved in 1.425 ml of eluent were used for the measurement; the injection volume was 20 μL. The GPC measurements were carried out on a Waters® Acquity UPLC® H-Class Bio system equipped with: i) a photodiode array (PDA) detector [Acquity™ UPLC™ (1.5 μL biocompatible cell; measurement was carried out at 225 nm); supplied by WATERS®]; ii) a separation module equipped with one Agilent Bio-SEC column (7.8 x 300 mm, pore size 100 Å, filled with particles having particle size of 3 μm, product number: 5190-2501) supplied by Agilent. The $M_n$ and $M_w$ were determined with the help of suitable software for data processing (Empower™ 3, supplied by WATERS®).

**1.5.2. Determination of the $M_n$ of the members of XL-component ('Gel-Permeation Chromatography Method-2')**

The number average molecular weight ($M_n$) of a member of XL-component was determined via Gel Permeation Chromatography (GPC) calibrated with a set of polystyrene standards with a molecular weight range of from 162 up to 3.8 $x10^6$ Da, and using as eluent stabilized tetrahydrofuran [THF with 0.007- 0.015 % w/w butyl-hydroxytoluene (BHT)] (THF) modified with 0.8 (v/v %) acetic acid at a flow rate of 1 mL/min at 40 °C. 50 mg of a sample of the member of XL-component, were dissolved in 5 mL eluent for 16 hours at room temperature without shaking. and used for the measurement. 40 μL of the solution thus prepared were injected into the system for the measurement. The GPC measurements were carried out on a Waters Alliance system equipped with: i) a Waters Alliance 2414 refractive index detector at 40 °C, and ii) a Waters Alliance 2695 separation module equipped with two consecutive PL-gel columns of Mixed-C type with l/d = 300/7.5 mm and filled with particles having a particle size of 20 micron (supplied by Agilent).

**1.6. Determination of the polydispersity (PD)**

Upon determining the $M_n$ and $M_w$ via the Gel-Permeation Chromatography Method-1 of a member of polylysines-X, the polydispersity PD for said member of the polylysines-X was calculated according to the following equation:

$$PD= M_w/M_n.$$

**1.7. Determination of the amine number (AN) and the acid value (AV) ('Titration Method')**

The amine number (AN) and the acid value (AV) were determined by back-titrimetric analysis using the titrator 808 Titrando (supplied by Metrohm AG) with the 814 USB sample processor (supplied by Metrohm AG), and two electrodes one for the measurement of the pH (pH glass electrode supplied by Metrohm AG with product No. 6.0150.100) and a reference electrode (conductivity measuring cell c=0.8 $cm^{-1}$ with Pt1000 (fixed cable) supplied by Metrohm AG with product No. 6.9303.110) equipped with a pH meter and titrating the titrate with a solution of 1.000 N KOH in water was used. The titrate consisted of 1.000 g of polylysine (sample) (the amount refers to solids content), 60.00 mL of Millipore Ultra RO water and 10.000 mL of a solution of 1.000 N HCl in water [Titripur® supplied by Merck; product number 1.09057]. The data processing and control handling of all titrations described in this were accomplished via the use of the software Tiamo™ 2.4 supplied by Metrohm AG.

The titration curve [pH vs. Volume of titrant (x-axis)] (abbreviated as TC) and the first derivative curve of the TC [electrical potential vs. Volume of titrant (x-axis)] are recorded simultaneously and are plotted together in the same graph (pH on Y1-axis and electrical potential on Y2-axis, and volume of titrant on X-axis). The first derivative curve of the TC is known as ERC which stands for Equivalence point Recognition Criteria and is expressed in units for electrical potential (mV). The ERC affords either 2 or 3 peaks (ERC peaks) in succession to each other. Each of these ERC peaks corresponds to a certain volume of titrant. One of these ERC peaks -typically the one of highest signal (delta voltage)- corresponds to the lowest volume of the titrant ($V_{min}$) (in mL) and another one ERC peak corresponds to the highest volume of the titrant ($V_{max}$) (in mL).

The amine number (AN) is determined according to the following formula:

$$\text{Amine number (mg KOH/g sample)} = 56.1 * (V_{max} - V_{min})$$

wherein $V_{min}$ and $V_{max}$ are as explained above.

The acid value (AV) is determined according to the following formula:

$$\text{Acid value (mg KOH/g sample)} = 56.1 * [V_{min}- [10.00 - (V_{max} - V_{min})]]$$

wherein $V_{min}$, $V_{max}$ are as explained above.

The measurements for the determination of the AN and AV were performed in duplicate and the reported values

for each of the AN and AV were the average of these measurements.

**1.8. Determination of the apparent viscosity ('Rheometry Method')**

The apparent viscosity (shear stress divided by the shear rate) was determined using the rotational rheometer RheolabQC supplied by Anton Paar, connected to a water bath, controlled at 23.0 °C. This method is based on ISO 3219:1993. For this measurement, the appropriate spindle/cup combination and shear rate are chosen based on the estimated apparent viscosity. For all our experiments we used a Z3 spindle/cup combination which and a shear rate of 100 $s^{-1}$. The cup is then filled with sample (polylysine dissolved in water with a solids content of 60 ± 1 %). The spindle is inserted into the cup, the cup is mounted in the viscometer and the spindle is connected to the instrument. The correct program (for all our measurements we selected the program for the Z3 spindle in combination with a shear rate of 100 $s^{-1}$) is selected on the RheolabQC and the measurement is performed.

**1.9. Determination of the solids content ('Solids-content Method')**

The solids content (wt%) was determined using a Halogen Moisture Analyzer HR73 supplied by Mettler Toledo. For this measurement, 1.00 g of sample (polylysine dissolved in water) is weighed onto a glass fiber pad which is placed on an aluminium pan and then heated at 140 °C for 30 minutes. The solids content is determined automatically based on the difference in mass before and after the heating at 140 °C.

**1.10. Determination of the water content ('Water-Content Method')**

The amount of water contained in an entity for example in a composition, or in a polylysine component, or in a fibrous element or in wood chips, is determined by drying said entity at 120 °C for 24 hours under reduced pressure (50 mbar) in a Thermo Scientific® VacuTherm vacuum oven supplied by Thermo Fischer Scientific. The amount of water contained in the entity was calculated according to the following equation:

$$\text{Water (pph or wt\% of the entity)} = [1- (M_2/M_1)] \times 100$$

wherein

$M_1$: the mass of the entity prior to drying.
$M_2$: the mass of the entity upon drying (measured within 5 minutes after removing the sample from the oven).

**1.11. Determination of the degree of branching**

The degree of branching (DB) of a polylysine is determined via $^1$H-NMR spectroscopy and calculated according to the equation 1:

$$DB = \frac{2D}{2D + L}$$

(equation 1)

wherein

D is equal to or higher than 0, L is equal to or higher than 0, and at least one of the D and L is higher than 0; and wherein
D is the integral of the $^1$H-NMR peaks corresponding to the methine proton (shorthand for the proton to the tertiary carbon; indicated in bold in Formulae D1a and D1b) of any number of the following group(s) shown in Formulae D1a and D1b that may be present in the polylysine (if no such methine protons are present in the polylysine, the D is equal to zero):

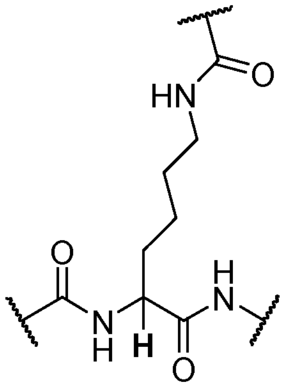

and

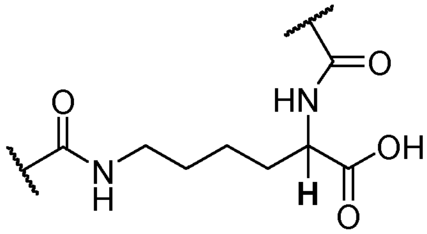

Formula D1a    Formula D1b

L represents the sum of $L_{\alpha}$ and $L_{\varepsilon}$, wherein

$L_{\alpha}$ is the integral of the $^{1}$H-NMR peaks corresponding to the methine proton (shorthand for the proton to the tertiary carbon; indicated in bold in Formulae L1a and L1b) of any number of any one of the following group(s) shown in Formulae L1a and L1b that may be present in the polylysine (if no such methine protons are present in the polylysine, the $L_{\alpha}$ is equal to zero):

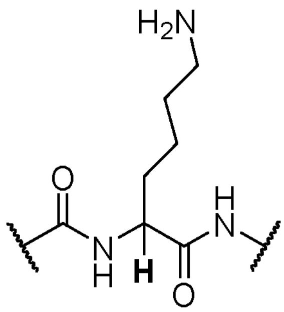

and

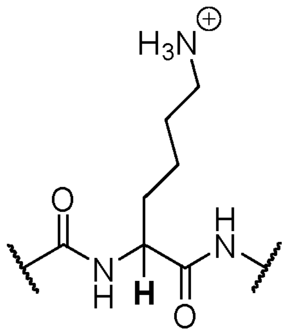

Formula L1a    Formula L1b

and

$L_{\varepsilon}$ is the integral of the $^{1}$H-NMR peaks corresponding to the methine proton (shorthand for the proton to the tertiary carbon indicated in bold in Formulae L2a and L2b) of any number of any one of the following group(s) shown in Formulae L2a and L2b that may be present in the polylysine (if no such methine protons are present in the polylysine, the $L_{\varepsilon}$ is equal to zero):

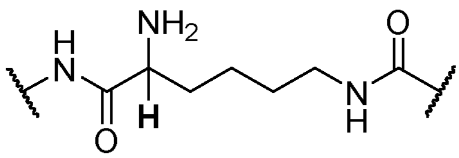

and

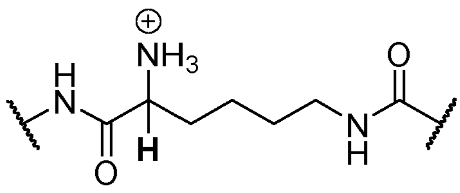

Formula L2a    Formula L2b

The DB ranges from and including 0 up to and including 1.

The $^{1}$H-NMR spectra were recorded at room temperature on a Bruker Ascend™ 400 Spectrometer, using deuterated methanol (also known as tetradeuteromethanol or methanol-$d_4$) as solvent. Methanol-$d_4$ is the preferred solvent; however, other suitable deuterated solvents may be used.

In the case of methanol-$d_4$ the chemical shifts of the $^{1}$H-NMR peaks corresponding to:

- the D-proton(s) are found at 4.15-4.40 ppm;
- the $L_{\alpha}$-proton(s) are found at 3.90-4.10 ppm; and
- the $L_{\varepsilon}$-proton(s) are found at 3.25-3.30 ppm.

**1.12. Determination of the gel content ('Gel-Content Method')**

The gel content of a polylysine was determined as follows:
A mixture of 10 % solids content of a polylysine in water was prepared and stored at room temperature for 24 hours. Subsequently, an amount of 3000 g of the mixture thus prepared (herein sample), was filtrated through a pre-weighed ($Mf_{before}$) filter e.g. a folded qualitative filter paper, in order to remove any insoluble fraction of average size of at least 5 micron and higher. Once the filtration was completed, the filter was washed with water, the amount of which was double of the amount of the sample. Subsequently, the filter was placed in a vacuum oven at 40 °C under a pressure of 50 mbar, for 12 hours in order to remove any water. Subsequently, the filter was weighed again ($Mf_{after}$).
The gel content was calculated from the equation 2:

$$Gel\ content\ (\%) = \left(\frac{Mf_{after} - Mf_{before}}{M_{polylysine}}\right) x100$$

(equation 2)

wherein

$Mf_{after}$ is the mass of the filter after the removal of the water,
$Mf_{before}$ is the mass of the filter before the filtration of the sample, and
$M_{polylysine}$ is the mass of the polylysine in the sample (taken into account the solids content of the sample). Thus, in 3000 g of sample having 10 % solids content, the $M_{polylysine}$ is 30 g.

**1.13. Methods for determining properties of the fibreboards**

**1.13.1. Determination of the length (L), width (W) and the thickness (T)**

The length (L) of the specimens was measured with a ruler at 3 different points of a specimen and the average of these 3 measurements was recorded as the width of the specimen.
The width (W) of the specimens was measured with a digital ruler at 3 different points of a specimen and the average of these 3 measurements was recorded as the width of the specimen.
The thickness (T) of the specimens was measured with a digital ruler at 3 different points of a specimen and the average of these 3 measurements was recorded as the thickness of the specimen.

**1.13.2. Determination of the density (d)**

Specimens were prepared by cutting the fibreboard prepared in one piece of 150 mm by 40 mm. The length (L; in m), width (W; in m) and thickness (T; in m) of the specimens were measured as mentioned above, as well as their weight (M; in Kg).
The density (d; in $Kg/m^3$ ) of a specimen was calculated according to the following equation and the average of 2 calculations -corresponding to two different specimens of the fibreboard- was recorded as the density of the fibreboard:

$$d= M / ( L \times W \times T).$$

**1.13.3. Determination of the flexural properties (Static Bending Method)**

The assessment of the flexural properties i.e. i) the modulus of rupture ($R_b$) and ii) the apparent modulus of elasticity (E) were determined via static bending tests according to the ASTM D1037-12 and in particular section 9 (entitled 'Static Bending') of the ASTM D1037-12, subject to the following two differences from the provisions of the section 9 of the ASTM D1037-12: i) the specimens were prepared by cutting the produced panel in two pieces of 150 $\pm$ 1 mm by 40 $\pm$ 1 mm, and ii) each specimen was placed in a 3-point (center loading) fixture and the length of the span (L) was fixed to 100 mm.
The static bending tests were carried out on objects prepared upon subjecting their corresponding compositions to simultaneous heat (210 °C) and pressure (9 $Kg/cm^2$= = 882.6 kPa) for 5 min. In §9.7 of the ASTM D1037-12, the modulus of rupture ($R_b$) and the apparent modulus of elasticity (E) are defined and calculated according to the following two

equations:

$$R_b = \frac{3P_{max}L}{2bd^2}$$

$$E = \frac{L^3}{4bd^3}\frac{\Delta P}{\Delta y}$$

wherein

b= width of specimen measured in dry conditions (in mm);
d= thickness of specimen measured in dry conditions (in mm);
$\Delta P / \Delta y$ = slope of straight line portion of the load-deflection curve (in N/mm);
$P_{max}$ = maximum load (in N);
L = length of span (in mm);
$R_b$ = modulus of rupture (kPa);
E = apparent modulus of elasticity (kPa).

The static bending tests were carried out on ZMART.PRO 1445 supplied by Zwick/Roell, at a constant rate of speed of 3 mm/min and with the load applied to the center of each specimen. The test was continued until rupture of the specimen, while recording all force vs. deflection data. From the data obtained, one can calculate the modulus of rupture ($R_b$) and apparent modulus of elasticity (E), according to the equations provided in §9.7 of the ASTM D1037-12 and which are offered above for convenience.

**1.13.4. Determination of the internal bond strength**

The assessment of the internal bond strength was determined according to NEN-EN 319:1993.

**1.14. Results & Discussion**

Table 1 summarizes the comparative and inventive compositions as well as the internal bond strength, the modulus of rupture ($R_b$) and the apparent modulus of elasticity (E) of the fibreboards prepared upon fast-curing (press time factor equal to 9 sec/mm) at low temperature (160 °C) of their corresponding compositions.

The abbreviation 'DL' shown in Table 1 stands for delamination (for delamination see definition in the section entitled Detailed Description of the Invention).

From the results shown in Table 1, it is evident that only the inventive compositions provided a solution to the technical problem. More particularly, when the inventive compositions were fast-cured at 160 °C to prepare fibreboards, the resulted fibreboards had:

- internal bond strength of at least 0.4 MPa,
- modulus of rupture ($R_b$) of at least 10 MPa, and
- apparent modulus of elasticity (E) of at least 1700 MPa.

Each one of the comparative compositions C1 (which offers a simulation of the compositions of WO 2022/096518 A1) C2, C3, C4, C5, C6, C7, C8, C9 and C10 resulted either in delamination or they did not meet all three requirements for the internal bond strength, $R_b$ and E.

The results shown in Table 1, also demonstrate the criticality and purposiveness of all the features of the inventive compositions and in particular the ranges associated with the amount of the polylysine component in the composition and the one associated with the weight ratio K as well as the type of polylysine component and their combination.

More specifically, upon comparing:

a) the inventive compositions I1 to I5 to the comparative compositions C6, C8 and C9 which are outside the claimed range for the weight ratio K (weight ratio K of C6 was 0.01, the one of C8 was 5.99 and the one of C9 was 9.00), it becomes evident the criticality and purposiveness of the weight ratio K;

b) the inventive compositions I1 to I4 to the comparative compositions C4, C5 and C7 which are outside the claimed range for the amount of the polylysine component in the composition (the amount of polylysine component in C4 was 0.90 wt% of the composition, the one of C5 was 2.70 wt% of the composition and the one of C7 was 18.00 wt% of the composition), it becomes evident the criticality and purposiveness of the amount of the polylysine component in the composition;

c) the inventive composition I2 to the comparative composition C10 which C8 was formulated with ε-polylysine (which is a linear polylysine, thus not a hyperbranched polylysine, let alone a hyperbranched polylysine as claimed) it becomes evident the criticality and purposiveness of the type of polylysine component in the composition;

d) all the inventive compositions to all the comparative compositions it becomes evident the criticality and purposiveness of the combination of all the features of the claimed invention amongst them -but not limited to- the type of polylysine, the amount of the polylysine component and the weight ratio K.

Thus, only the inventive compositions provided a solution to the technical problem and by achieving so the compositions of the invention constitute a major technological advancement in the field of fibreboards whereas the compositions of the state-of the-art upon fast-curing at low temperature resulted either in delamination or they did not meet all three requirements for the internal bond strength, $R_b$ and E.

**Table 1**

| Composition | | | | | | | Properties of Fibreboard | | |
|---|---|---|---|---|---|---|---|---|---|
| Index No. | Amount of fibrous component (wt% of the composition) | XL-component | Amount of XL-component (wt% of the com position) | Polylysine component | Amount of polylysine component (wt% of the composition) | Weight Ratio K | Internal Bond Strength (MPa) | Modulus of Rupture (MPa) | Apparent Modulus of Elasticity (MPa) |
| C1 | 94.20 | | | PLL-1 | 5.80 | | DL | DL | DL |
| C2 | 94.20 | DAAM | 0.58 | PLL-1 | 5.22 | 0.11 | 0.31 | 8.5 | 1850 |
| C3 | 94.20 | DAAM | 1.16 | PLL-1 | 4.64 | 0.25 | 0.34 | 8.3 | 1800 |
| C4 | 99.00 | XL-C1 | 0.10 | PLL-1 | 0.90 | 0.11 | DL | DL | DL |
| C5 | 97.00 | XL-C1 | 0.30 | PLL-1 | 2.70 | 0.11 | 0.18 | 8.8 | 1580 |
| C6 | 94.20 | XL-C1 | 0.03 | PLL-1 | 5.77 | 0.01 | 0.32 | 9.1 | 1850 |
| I1 | 94.20 | XL-C1 | 0.32 | PLL-1 | 5.48 | 0.06 | 0.67 | 12.8 | 2160 |
| I2 | 94.20 | XL-C1 | 0.58 | PLL-1 | 5.22 | 0.11 | 0.75 | 13.4 | 2180 |
| I3 | 94.20 | XL-C1 | 0.87 | PLL-1 | 4.93 | 0.18 | 0.55 | 11.3 | 1840 |
| I4 | 91.00 | XL-C1 | 0.90 | PLL-1 | 8.10 | 0.11 | 0.60 | 12.1 | 1920 |
| C7 | 80.00 | XL-C1 | 2.00 | PLL-1 | 18.00 | 0.11 | 0.15 | 7.9 | 1150 |
| I5 | 94.20 | XL-C1 | 1.74 | PLL-1 | 4.06 | 0.43 | 0.55 | 11.2 | 1800 |
| C8 | 94.20 | XL-C1 | 4.97 | PLL-1 | 0.83 | 5.99 | 0.24 | 6.5 | 1240 |
| C9 | 94.20 | XL-C1 | 5.22 | PLL-1 | 0.58 | 9.00 | DL | DL | DL |
| I6 | 94.20 | XL-C2 | 0.29 | PLL-1 | 5.51 | 0.05 | 0.60 | 12.1 | 1860 |
| I7 | 94.20 | XL-C2 | 0.58 | PLL-1 | 5.22 | 0.11 | 0.75 | 12.6 | 1820 |
| C10 | 94.20 | XL-C1 | 0.58 | PLL-2 | 5.22 | 0.11 | DL | DL | DL |

## Claims

1. A composition comprising a constituent-A, which constituent-A consists of:

- a polylysine component,
- a XL-component, and
- a fibrous component,

wherein

the polylysine component selected from the group consisting of polylysines-X and mixtures thereof, and wherein the polylysines-X are selected from the group consisting of hyperbranched polylysines and primary ammonium salt of hyperbranched polylysines, wherein each one of the polylysines-X has a degree of branching determined by $^1$H-NMR spectroscopy as disclosed in the specification, of at least 0.30 and at most 0.60, an apparent viscosity determined by the Rheometry Method as disclosed in the specification, of at least 400 and at most 8000 mPa.s, and a gel content determined by the Gel-Content Method as disclosed in the specification, of at most 4.0 %; and

the XL-component is selected from the group consisting of monomeric or polymeric compounds each of which has at least two XL-groups per molecule wherein the XL-groups are selected from the group consisting of groups according to the formula XL1 and groups according to the formula XL2

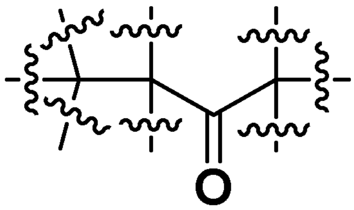

Formula XL1

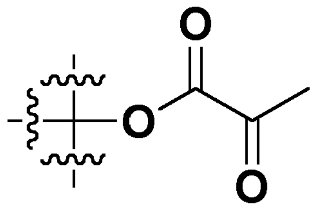

Formula XL2

wherein the wavy lines signify that the molecular structure beyond the point indicated by the wavy line, is not specified,

and

the fibrous component consists of at least one fibrous element which fibrous element comprises vegetable fibers, and wherein the fibrous element is free of any fibers other than the vegetable fibers,

and

wherein

the composition is free of any fibers other than the vegetable fibers of the fibrous component, and

wherein

the constituent-A is present in an amount of at least 10 and at most 100 wt% of the composition, and

wherein

the polylysine component is present in an amount of at least 3.0 and at most 15.0, wt% of the composition, and

wherein

the weight ratio K defined as the weight amount of the XL-component divided by the weight amount of the polylysine component is at least 0.05 and at most 5.

2. The composition as claimed in claim 1, wherein the XL-groups are selected from the group consisting of groups according to the formula XL2 and groups according to the formula XL1a

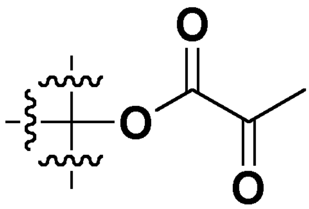

Formula XL2

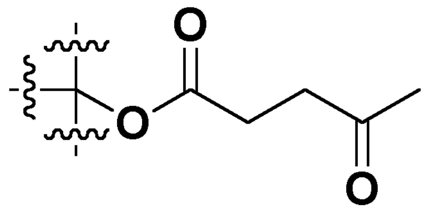

Formula XL1a

wherein the wavy lines signify that the molecular structure beyond the point indicated by the wavy line, is not specified.

3. The composition as claimed in any one of the preceding claims, wherein each one of the polylysines-X has an apparent viscosity of at least 400 and at most 4000, for example at least 400 and at most 2500, for example at least 400 and at most 2000 mPa.s.

4. The composition as claimed in any one of the claims 1 to 2, wherein each one of the polylysines-X has:

- a number average molecular weight (abbreviated as $M_n$) weight determined by the Gel-Permeation Chromatography Method-1 as disclosed in the specification, of at least 1100 and at most 10000 Da,
- a weight average molecular weight (abbreviated as $M_w$) determined by the Gel-Permeation Chromatography Method-1 as disclosed in the specification, of at least 3000 and at most 50000 Da,
- a polydispersity calculated as the ratio of $M_w/M_n$, of at least 2 and at most 15,
- an apparent viscosity of at least 400 and at most 8000, for example at least 400 and at most 4000, for example at least 400 and at most 2500, for example at least 400 and at most 2000 mPa.s,
- an amine number determined by the Titration Method as disclosed in the specification, of at least 200 and at most 700 mg KOH/g,
- an acid value determined by the Titration Method as disclosed in the specification, of at least 10 and at most 150 mg KOH/g, and
- a gel content determined by the Gel-Content Method as disclosed in the specification, of at most 3.0, preferably at most 2.0, more preferably at most 1.0, even more preferably at most 0.5, most preferably a gel content of 0.0 %.

5. The composition as claimed in any one of the preceding claims, wherein the polylysines-X are selected from the group consisting of hyperbranched polylysines.

6. The composition as claimed in any one of the preceding claims, wherein the constituent-A is present in an amount of at least 20 and at most 100, more preferably at least 40 and at most 100, for example at least 60 and at most 100, for example at least 80 and at most 100 wt% of the composition.

7. The composition of the invention as claimed in any one of the preceding claims, wherein the polylysine component is present in an amount of at least 3.0 and at most 12.0, preferably at least 3.0 and at most 10.0 wt% of the composition.

8. The composition of the invention as claimed in any one of the preceding claims, wherein the weight ratio K is at least 0.05 and at most 1, preferably at least 0.05 and at most 0.5.

9. The composition as claimed in any one of the preceding claims, wherein the vegetable fibers are selected from the group consisting of natural lignocellulosic fibers.

10. A process for obtaining an object wherein the process comprises the steps of:

- providing a composition as claimed in any one of the preceding claims 1 to 9; and
- subjecting the composition to heat and/or pressure and/or vacuum, preferably simultaneous heat and pressure, to form an object, and
- collecting the object.

11. An object obtained by a process as claimed in claim 10.

12. The object as claimed in claim 11, wherein the object is a fibreboard.

**13.** An article comprising: a) a part which is solid at 23 °C and 1 atm; and one or both of b) and c), wherein b) is a composition as claimed in any one of claims 1-9, and c) is an object as claimed in any one the claims 11 to 12.

**14.** Use of any one or any combination of the i) to iii):

i) a composition as claimed in any one of the claims 1 to 9;
ii) an object as claimed in any one of claims 11 to 12;
iii) an article as claimed in claim 13;

in absorbents, 3D-printing, automotive applications, marine applications, aerospace applications, medical items, defense applications, sports/recreational applications, architectural applications, bottling applications, household applications, machinery applications, can applications, coil applications, energy related applications, and electricity related applications.

## Patentansprüche

**1.** Zusammensetzung, umfassend einen Bestandteil A, wobei der Bestandteil A besteht aus:

- einer Polylysin-Komponente,
- einer XL-Komponente und
- einer Faserkomponente,

wobei:

die Polylysin-Komponente ausgewählt ist aus der Gruppe, bestehend aus Polylysinen-X und Mischungen davon, und wobei die Polylysine-X ausgewählt sind aus der Gruppe, bestehend aus hyperverzweigten Polylysinen und primärem Ammoniumsalz von hyperverzweigten Polylysinen, wobei jedes der Polylysine-X einen durch $^{1}$H-NMR-Spektroskopie wie in der Beschreibung offenbart bestimmten Verzweigungsgrad von mindestens 0.30 und höchstens 0.60, eine durch das Rheometrieverfahren wie in der Beschreibung offenbart bestimmte scheinbare Viskosität von mindestens 400 und höchstens 8000 mPa.s und einen durch das Gelgehaltsverfahren wie in der Beschreibung offenbart bestimmten Gelgehalt von höchstens 4.0 % aufweist;
und
wobei die XL-Komponente ausgewählt ist aus der Gruppe, bestehend aus monomeren oder polymeren Verbindungen, von denen jede mindestens zwei XL-Gruppen pro Molekül aufweist, wobei die XL-Gruppen ausgewählt sind aus der Gruppe, bestehend aus Gruppen der Formel XL1 und Gruppen der Formel XL2

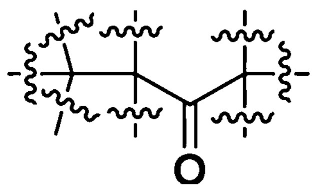

Formel XL1

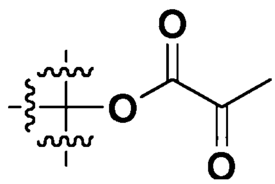

Formel XL2

wobei die Wellenlinien bedeuten, dass die Molekülstruktur jenseits des durch die Wellenlinie angegebenen Punktes nicht spezifiziert ist, und
die Faserkomponente aus mindestens einem Faserelement besteht, wobei das Faserelement pflanzliche Fasern umfasst und wobei das Faserelement frei von anderen Fasern als den pflanzlichen Fasern ist,
und
wobei:
die Zusammensetzung frei von anderen Fasern als den pflanzlichen Fasern der Faserkomponente ist, und
wobei:
der Bestandteil A in einer Menge von mindestens 10 und höchstens 100 Gew.-% der Zusammensetzung vorhanden ist, und
wobei:
die Polylysin-Komponente in einer Menge von mindestens 3.0 und höchstens 15.0 Gew.-% der Zusammensetzung vorliegt, und
wobei:
das Gewichtsverhältnis K, definiert als die Gewichtsmenge der XL-Komponente geteilt durch die Gewichtsmenge der Polylysin-Komponente, mindestens 0.05 und höchstens 5 beträgt.

**2.** Zusammensetzung nach Anspruch 1, wobei die XL-Gruppen ausgewählt sind aus der Gruppe, bestehend aus Gruppen gemäß der Formel XL2 und Gruppen gemäß der Formel XL1a

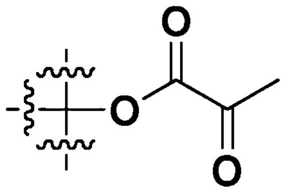

Formel XL2

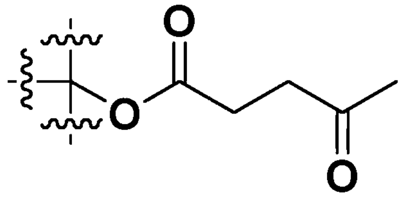

Formel XL1a

wobei die Wellenlinien bedeuten, dass die Molekülstruktur jenseits des durch die Wellenlinie angegebenen Punktes nicht spezifiziert ist.

**3.** Zusammensetzung nach einem der vorhergehenden Ansprüche, wobei jedes der Polylysine-X eine scheinbare Viskosität von mindestens 400 und höchstens 4000, beispielsweise mindestens 400 und höchstens 2500, beispielsweise mindestens 400 und höchstens 2000 mPa.s aufweist.

**4.** Zusammensetzung nach einem der Ansprüche 1 bis 2, wobei jedes der Polylysine-X Folgendes aufweist:

- ein durch das in der Beschreibung offenbarte Gelpermeationschromatographieverfahren-1 bestimmtes zahlenmittleres Molekulargewicht (abgekürzt als $M_n$) von mindestens 1100 und höchstens 10000 Da,
- ein durch das in der Beschreibung offenbarte Gelpermeationschromatographieverfahren-1 bestimmtes gewichtsmittleres Molekulargewicht (abgekürzt als $M_w$) von mindestens 3000 und höchstens 50000 Da,
- eine Polydispersität, berechnet als das Verhältnis von $M_w/M_n$, von mindestens 2 und höchstens 15,
- eine scheinbare Viskosität von mindestens 400 und höchstens 8000, beispielsweise mindestens 400 und höchstens 4000, beispielsweise mindestens 400 und höchstens 2500, beispielsweise mindestens 400 und höchstens 2000 mPa.s,
- eine durch das in der Beschreibung offenbarte Titrationsverfahren bestimmte Aminzahl von mindestens 200 und höchstens 700 mg KOH/g,
- einen durch das in der Beschreibung offenbarte Titrationsverfahren bestimmten Säurewert von mindestens 10 und höchstens 150 mg KOH/g, und
- einen nach dem in der Beschreibung offenbarten Gelgehaltsverfahren bestimmten Gelgehalt von höchstens 3.0, bevorzugt höchstens 2.0, besonders bevorzugt höchstens 1.0, ganz besonders bevorzugt höchstens 0.5, noch bevorzugter einen Gelgehalt von 0.0 %.

**5.** Zusammensetzung nach einem der vorhergehenden Ansprüche, wobei die Polylysine-X ausgewählt sind aus der Gruppe, bestehend aus hyperverzweigten Polylysinen.

**6.** Zusammensetzung nach einem der vorhergehenden Ansprüche, wobei der Bestandteil A in einer Menge von mindestens 20 und höchstens 100, bevorzugt mindestens 40 und höchstens 100, beispielsweise mindestens 60 und höchstens 100, beispielsweise mindestens 80 und höchstens 100 Gew.-% der Zusammensetzung, vorhanden ist.

**7.** Erfindungsgemäße Zusammensetzung nach einem der vorhergehenden Ansprüche, wobei die Polylysinkomponente in einer Menge von mindestens 3.0 und höchstens 12.0, bevorzugt mindestens 3.0 und höchstens 10.0 Gew.-% der Zusammensetzung, vorhanden ist.

**8.** Zusammensetzung der Erfindung nach einem der vorhergehenden Ansprüche, wobei das Gewichtsverhältnis K mindestens 0.05 und höchstens 1, bevorzugt mindestens 0.05 und höchstens 0.5 beträgt.

**9.** Zusammensetzung nach einem der vorhergehenden Ansprüche, wobei die pflanzlichen Fasern ausgewählt sind aus

der Gruppe, bestehend aus natürlichen Lignocellulosefasern.

**10.** Verfahren zum Herstellen eines Gegenstands, wobei das Verfahren die folgenden Schritte umfasst:

- Bereitstellen einer Zusammensetzung nach einem der vorhergehenden Ansprüche 1 bis 9; und
- Behandeln der Zusammensetzung mit Wärme und/oder Druck und/oder Vakuum, bevorzugt gleichzeitig Wärme und Druck, um einen Gegenstand zu bilden, und
- Entnehmen des Objekts.

**11.** Gegenstand, der durch ein Verfahren nach Anspruch 10 erhalten wird.

**12.** Gegenstand nach Anspruch 11, wobei der Gegenstand eine Faserplatte ist.

**13.** Erzeugnis, umfassend: a) einen Teil, der bei 23 °C und 1 atm fest ist; und eines oder beide von b) und c), wobei b) eine Zusammensetzung nach einem der Ansprüche 1 bis 9 ist und c) ein Gegenstand nach einem der Ansprüche 11 bis 12 ist.

**14.** Verwendung eines beliebigen oder einer beliebigen Kombination von i) bis iii):

i) einer Zusammensetzung nach einem der Ansprüche 1 bis 9;
ii) einem Gegenstand nach einem der Ansprüche 11 bis 12;
iii) einem Erzeugnis nach Anspruch 13;

in Absorptionsmitteln, 3D-Druck, Automobilanwendungen, Schifffahrtsanwendungen, Luft- und Raumfahrtanwendungen, medizinischen Artikeln, Verteidigungsanwendungen, Sport-/Freizeitanwendungen, architektonischen Anwendungen, Abfüllanwendungen, Haushaltsanwendungen, Maschinenanwendungen, Dosenanwendungen, Spulenanwendungen, energiebezogenen Anwendungen sowie in elektrizitätsbezogenen Anwendungen.

## Revendications

**1.** Composition comprenant un constituant-A, lequel constituant-A étant constitué de :

- un composant polylysine,
- un composant XL, et
- un composant fibreux,

le composant polylysine étant choisi dans le groupe constitué par des polylysines-X et des mélanges correspondants, et les polylysines-X étant choisies dans le groupe constitué par des polylysines hyperramifiées et un sel d'ammonium primaire de polylysines hyperramifiées, chacune des polylysines-X ayant un degré de ramification déterminé par spectroscopie de RMN du $^{1}H$ tel que décrit dans la description, d'au moins 0.30 et d'au plus 0.60, une viscosité apparente déterminée par le procédé de rhéométrie tel que décrit dans la description, d'au moins 400 et d'au plus 8000 mPa.s, et une teneur en gel déterminée par le procédé de teneur en gel tel que décrit dans la description, d'au plus 4.0 % ; et
le composant XL est choisi dans le groupe constitué par des composés monomères ou polymères dont chacun possède au moins deux groupes XL par molécule, les groupes XL étant choisis dans le groupe constitué par des groupes répondant à la formule XL1 et des groupes répondant à la formule XL2

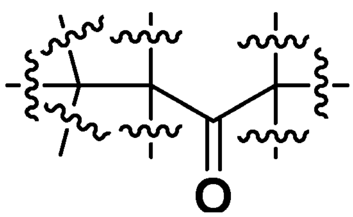
Formule XL1

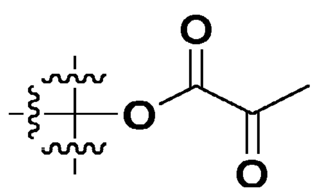
Formule XL2

les lignes ondulées signifiant que la structure moléculaire au-delà du point indiqué par la ligne ondulée n'est pas

spécifiée, et
le composant fibreux étant constitué d'au moins un élément fibreux, lequel élément fibreux comprenant des fibres végétales, et l'élément fibreux étant exempt de quelconques fibres autres que les fibres végétales, et
la composition étant exempte de quelconques fibres autres que les fibres végétales du composant fibreux, et
le constituant-A étant présent en une quantité d'au moins 10 et d'au plus 100 % en poids de la composition, et
le composant polylysine étant présent en une quantité d'au moins 3.0 et d'au plus 15.0 % en poids de la composition, et
le rapport pondéral K défini comme la quantité pondérale du composant XL divisée par la quantité pondérale du composant polylysine étant d'au moins 0.05 et d'au plus 5.

**2.** Composition selon la revendication 1, les groupes XL étant choisis dans le groupe constitué par des groupes selon la formule XL2 et les groupes selon la formule XL1a

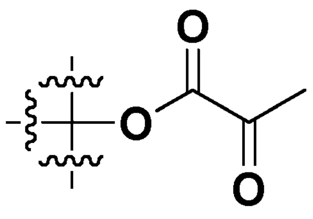

Formule XL2

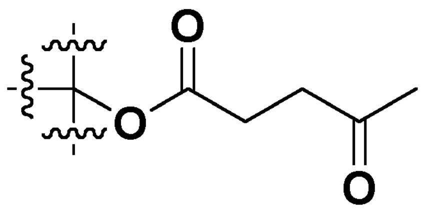

Formule XL1a

les lignes ondulées signifiant que la structure moléculaire au-delà du point indiqué par la ligne ondulée n'est pas spécifiée.

**3.** Composition selon l'une quelconque des revendications précédentes, chacune des polylysines-X ayant une viscosité apparente d'au moins 400 et au plus 4000, par exemple au moins 400 et au plus 2500, par exemple au moins 400 et au plus 2000 mPa.s.

**4.** Composition selon l'une quelconque des revendications 1 à 2, chacune des polylysines-X ayant :

- un poids moléculaire moyen en nombre (en abrégé $M_n$) déterminé par le procédé de chromatographie par perméation de gel 1 tel que décrit dans la description, d'au moins 1100 et d'au plus 10000 Da,
- un poids moléculaire moyen en poids (en abrégé $M_w$) déterminé par le procédé de chromatographie par perméation de gel 1 tel que décrit dans la description, d'au moins 3000 et d'au plus 50000 Da,
- une polydispersité calculée comme le rapport $M_w/M_n$, d'au moins 2 et d'au plus 15,
- une viscosité apparente d'au moins 400 et d'au plus 8000, par exemple d'au moins 400 et d'au plus 4000, par exemple d'au moins 400 et d'au plus 2500, par exemple d'au moins 400 et d'au plus 2000 mPa.s,
- un indice d'amine déterminé par le procédé de titrage tel que décrit dans la description, d'au moins 200 mg KOH/g et d'au plus 700 mg KOH/g,
- un indice d'acide déterminé par le procédé de titrage tel que décrit dans la description, d'au moins 10 et d'au plus 150 mg KOH/g, et
- une teneur en gel déterminée par le procédé de teneur en gel tel que décrit dans la description, d'au plus 3.0, préférablement d'au plus 2.0, plus préférablement d'au plus 1.0, mieux encore d'au plus 0.5, le plus préférablement une teneur en gel de 0.0 %.

**5.** Composition selon l'une quelconque des revendications précédentes, les polylysines-X étant choisies dans le groupe constitué par des polylysines hyperramifiées.

**6.** Composition selon l'une quelconque des revendications précédentes, le constituant-A étant présent en une quantité d'au moins 20 et d'au plus 100, plus préférablement d'au moins 40 et d'au plus 100, par exemple d'au moins 60 et d'au plus 100, par exemple d'au moins 80 et d'au plus 100 % en poids de la composition.

**7.** Composition de l'invention selon l'une quelconque des revendications précédentes, le composant polylysine étant présent en une quantité d'au moins 3.0 et d'au plus 12.0, préférablement d'au moins 3.0 et d'au plus 10.0 % en poids de la composition.

**8.** Composition selon l'une quelconque des revendications précédentes, le rapport pondéral K étant d'au moins 0.05 et d'au plus 1, préférablement d'au moins 0.05 et d'au plus 0.5.

**9.** Composition selon l'une quelconque des revendications précédentes, les fibres végétales étant choisies dans le groupe constitué par des fibres lignocellulosiques naturelles.

**10.** Procédé pour l'obtention d'un objet, le procédé comprenant les étapes de :

- fourniture d'une composition selon l'une quelconque des revendications 1 à 9 précédentes ; et
- soumission de la composition à de la chaleur et/ou de la pression et/ou du vide, préférablement simultanément de la chaleur et de la pression, pour former un objet, et
- collecte de l'objet.

**11.** Objet obtenu par un procédé selon la revendication 10.

**12.** Objet selon la revendication 11, l'objet étant un panneau de fibres.

**13.** Article comprenant : a) une partie qui est solide à 23 °C et 1 atm ; et l'un ou les deux parmi b) et c), b) étant une composition selon l'une quelconque des revendications 1 à 9, et c) étant un objet selon l'une quelconque des revendications 11 à 12.

**14.** Utilisation selon l'une quelconque ou une quelconque combinaison des i) à iii) :

i) une composition selon l'une quelconque des revendications 1 à 9 ;
ii) un objet selon l'une quelconque des revendications 11 à 12 ;
iii) un article selon la revendication 13 ;

dans des absorbants, une impression 3D, des applications d'automobile, des applications marines, des applications aérospatiales, des objets médicaux, des applications dans la défense, des applications dans les sports/loisirs, des applications architecturales, des applications de mise en bouteilles, des applications ménagères, des applications de machines, des applications de canette, des applications de bobines, des applications liées à l'énergie et des applications liées à l'électricité.

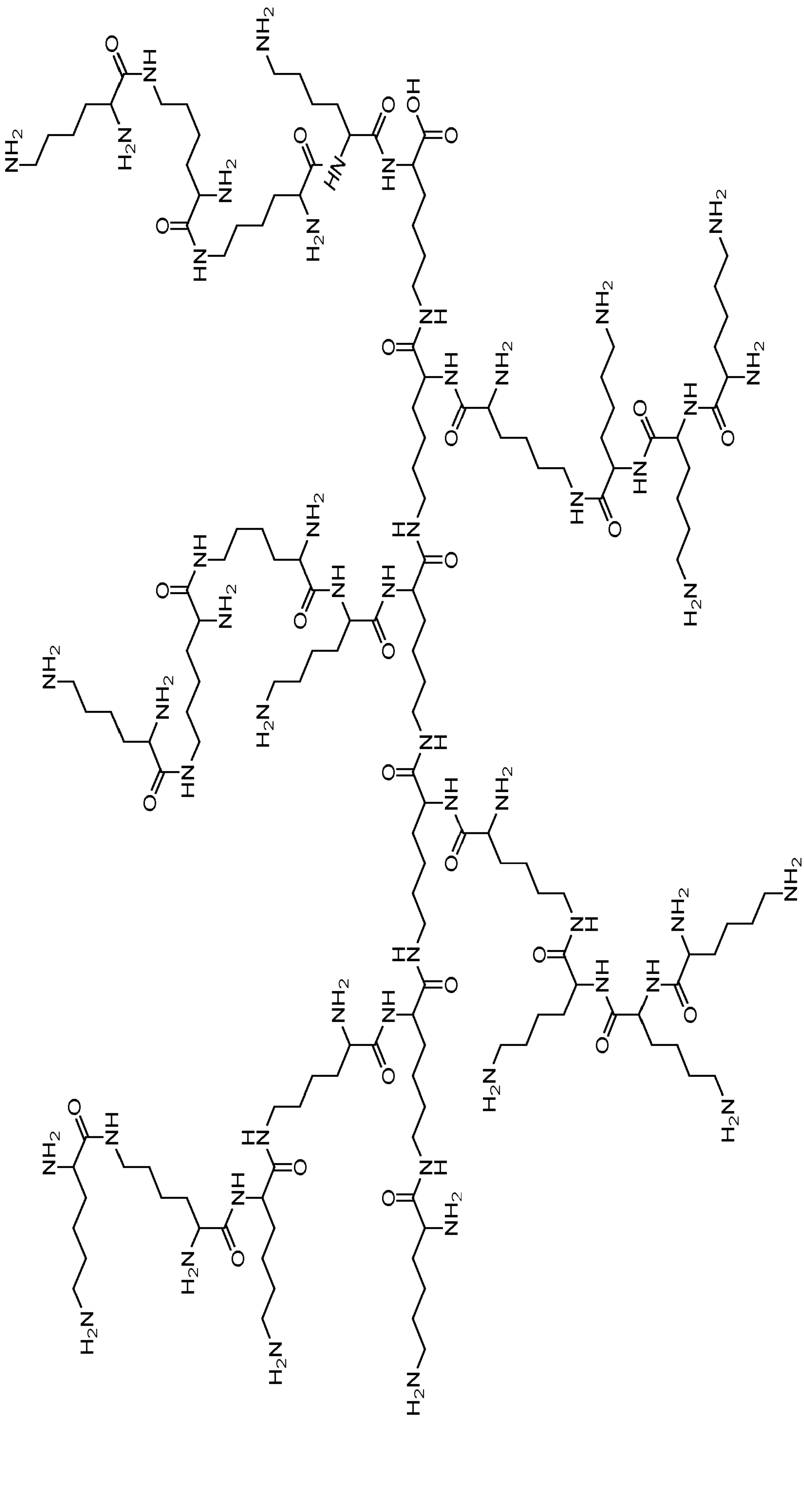

Figure 1

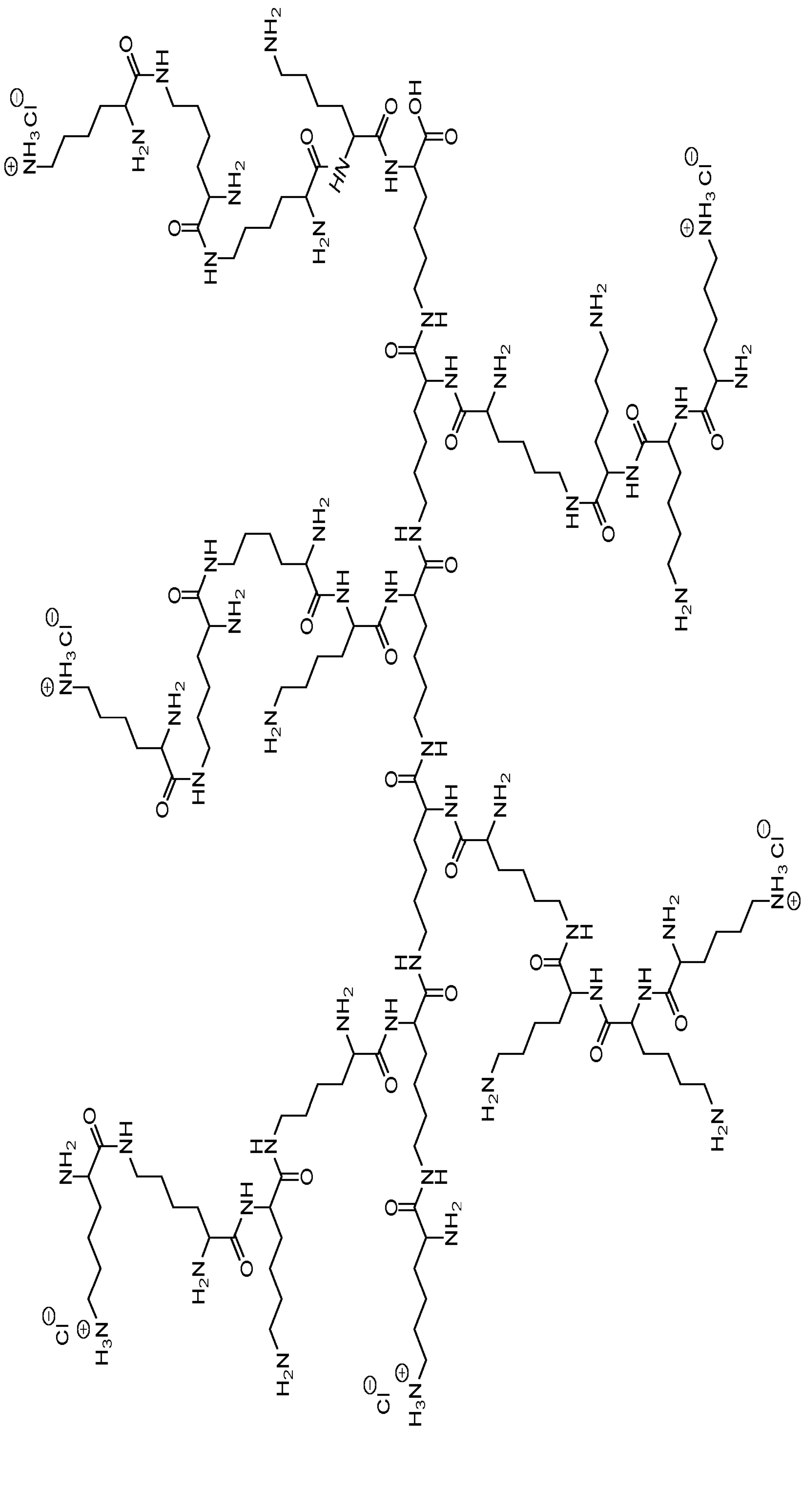

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022136612 A1
- US 2012202041 A1
- WO 2022096518 A1
- WO 2020230034 A1
- WO 2008057390 A2
- WO 2008068180 A1
- WO 2016009054 A1
- WO 2016009062 A1
- WO 2022096518 A
- KR 102187998 B1
- CN 110903786 A
- WO 2010031718 A1
- WO 2008046892 A2
- WO 2009037240 A1
- US 8846842 B2
- US 2007277928 A1
- US 8790632 B2
- WO 2022136611 A1
- WO 2022136613 A1
- WO 2022136614 A1
- WO 2003064452 A
- WO 0071600 A
- WO 2007060119 A
- US 20130123148 A
- WO 2016062578 A1


### Non-patent literature cited in the description


- *Macromolecules*, 2002, vol. 35, 8718-8723
- **RODRIGUEZ-HERNANDEZ et al.** *Biomacromolecules*, 2003, vol. 4, 249-258
- *Biochimie*, 1975, vol. 57, 1395-1396
- **HARADA**. *Bull. Chem. Soc. Japan*, 1959, vol. 32, 1007-1008
- **ROHLFING**. *Archives of Biochemistry and Biophysics*, 1969, vol. 130, 441-448
- **FOX et al.** *BioSystems*, 1976, vol. 8, 40-44
- **HENNON et al.** *Biochimie*, 1971, vol. 53, 215-223